(19) Europäisches Patentamt
European Patent Office
Office européen des brevets

(11) **EP 4 262 305 B1**

(12) **EUROPEAN PATENT SPECIFICATION**

(45) Date of publication and mention
of the grant of the patent:
**11.09.2024 Bulletin 2024/37**

(51) International Patent Classification (IPC):
*H04W 16/02* (2009.01)     *H04W 16/10* (2009.01)
*G06N 10/60* (2022.01)     *G06N 5/01* (2023.01)

(21) Application number: **22167880.8**

(52) Cooperative Patent Classification (CPC):
**H04W 16/02; G06N 10/60; H04W 16/10;** G06N 5/01

(22) Date of filing: **12.04.2022**

(54) **METHOD FOR OPTIMIZING AN ASSIGNMENT OF FREQUENCIES TO CELLS IN A MOBILE COMMUNICATIONS NETWORK**

VERFAHREN ZUM OPTIMIEREN DER ZUORDNUNG VON FREQUENZEN ZU ZELLEN IN EINEM MOBILKOMMUNIKATIONSNETZ

PROCÉDÉ D'OPTIMISATION D'UNE ATTRIBUTION DE FRÉQUENCES À DES CELLULES DANS UN RÉSEAU DE COMMUNICATIONS MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.10.2023 Bulletin 2023/42**

(73) Proprietors:
• **Fujitsu Technology Solutions GmbH**
**80807 München (DE)**
• **Deutsche Telekom AG**
**53113 Bonn (DE)**

(72) Inventors:
• **Geitz, Marc**
**58089 Hagen (DE)**
• **Holschke, Oliver**
**10969 Berlin (DE)**
• **Crisan, Christine**
**53229 Bonn (DE)**
• **Münch, Christian**
**80807 München (DE)**
• **Schinkel, Fritz**
**80807 München (DE)**
• **Engel, Sebastian**
**80807 München (DE)**

(74) Representative: **Epping - Hermann - Fischer Patentanwaltsgesellschaft mbH**
**Schloßschmidstraße 5**
**80639 München (DE)**

(56) References cited:
**EP-A1- 3 735 078**

• **YOUNG-HYUN OH ET AL: "Solving Multi-Coloring Combinatorial Optimization Problems Using Hybrid Quantum Algorithms", ARXIV.ORG, CORNELL UNIVERSITY LIBRARY, 201 OLIN LIBRARY CORNELL UNIVERSITY ITHACA, NY 14853, 1 November 2019 (2019-11-01), XP081524466**
• **TONY T. TRAN ET AL: "A Hybrid Quantum-Classical Approach to Solving Scheduling Problems", PROCEEDINGS OF THE NINTH INTERNATIONAL SYMPOSIUM ON COMBINATORIAL SEARCH (SOCS 2016), 20 June 2016 (2016-06-20) - 26 September 2018 (2018-09-26), pages 98 - 106, XP055509982, Retrieved from the Internet <URL:https://www.aaai.org/ocs/index.php/SOCS /SOCS16/paper/viewFile/13958/13239> [retrieved on 20180926]**
• **NAGHSH ZAHRA ET AL: "Digitally Annealed Solution for the Maximum Clique Problem with Critical Application in Cellular V2X", ICC 2019 - 2019 IEEE INTERNATIONAL CONFERENCE ON COMMUNICATIONS (ICC), IEEE, 20 May 2019 (2019-05-20), pages 1 - 7, XP033582128, DOI: 10.1109/ICC.2019.8761634**

• SARAVANAN M ET AL: "A Quantum Method for Subchannel allocation in Device-to-Device Communication", 2021 INTERNATIONAL CONFERENCE ON REBOOTING COMPUTING (ICRC), IEEE, 30 November 2021 (2021-11-30), pages 47 - 55, XP034108636, DOI: 10.1109/ICRC53822.2021.00017

**Description**

The invention pertains to a computer-implemented method for optimizing an assignment of frequencies to cells of a mobile communications network, the cells being distributed for communication within the mobile communications network. The invention also pertains to a quantum concept processor configured for performing such a method as well as a computer program implemented to perform such a method.

Communication demands regarding traffic in mobile communications networks continuously increase. More and more devices and applications push mobile communications to new peaks. Moreover, the increasing demand of digitized and decentralized mobile working as well as increasing streaming demands are other big contributors to this trend. These increasing amounts of data being transported through mobile communications networks accompanied by a requirement for increased network capacity impose a significant challenge to Service Providers.

Mobile communications networks, in particular mobile phone networks, e.g. 2G-networks like GSM or TETRA, comprise a topology of distributed "cells" for transmitting, receiving and forwarding mobile communication traffic and control data within the network via radio frequency communication. Each cell acts as a mobile communication node covering a certain area for mobile communications networking, thereby using one or more communication frequencies. Mobile communication participants, like mobile phones and other cellular or radio communication devices, connect to a respective cell for mobile communication with other participants in the communications network.

Depending on the location and characteristics of the surroundings of the cells (e.g. urban areas vs. rural areas) and depending on the number and density of participating devices, the cells differ in collections of frequencies assigned to them to reliably handle the amount and volume of communication traffic. The frequencies are used for data or conversation transmissions, control channels and more. To avoid congestion in mobile communications networks and degradation of user experience, mobile phone providers, hence, are interested to make the best possible use of a provided frequency spectrum.

The capacity of a mobile communications network can be enhanced by assigning frequencies from the frequency spectrum of the mobile network operator to cells in a dense way. However, this may have the disadvantage that frequencies of neighbouring cells violate a necessary distance requirement. For example, if frequencies of neighbouring or otherwise related cells are equal or adjacent in the frequency spectrum, they interfere with each other. This leads to signal interference, degradation of communication quality or communication failure.

One possibility to solve the problem of frequency assignment in cellular communication networks comprises a two-step approach. In a first step, a preliminary assignment is made with regard to the conditions to be fulfilled (hard constraints) such as conditions for neighboring cells. The second step consists of an iterative brute force local optimization at unsaturated cells. For each such cell a ring of direct neighbouring cells is re-planned. If no satisfactory solution is found, the procedure can be repeated with a wider ring, which is the union of all cells from the neighboring rings of directly adjacent cells, from the first step of ring generation. This ring-based cell collection procedure can be performed recursively. However, such conventional approaches have the disadvantage that local optimization at unsaturated cells can deteriorate the interference at other cells within the network or even lead to the fact that a required number of frequencies is not or only insufficiently allocated to certain cells. Moreover, such conventional approaches have the disadvantage that optimization techniques applied so far quickly reach their limits.

EP 3735078 A1 discloses a device that generates a hypergraph for a plurality of cells included in a communications network. The device identifies one or more parameters for allocating operating transmission frequencies to the plurality of cells. The plurality of cells correspond to vertices of the hypergraph, and one or more cumulative transmission interference regions, associated with the plurality of cells, correspond to hyperedges of the hypergraph. The device generates a constraint model based on the hypergraph and the one or more parameters. The device determines, using a quantum solver, one or more minimum energy states of the constraint model. The one or more minimum energy states correspond to respective operating transmission frequency allocation configurations for the plurality of cells. The device assigns, based on a minimum energy state of the one or more minimum energy states, operating transmission frequencies to the plurality of cells.

The paper "Solving Multi-Coloring Combinational Optimization Problems Using Hybrid Quantum Algorithms" by Young-Hyun Oh et. al. discusses utilization of a variational quantum eigensolver technique and quantum approximate optimization algorithm to find solutions for three combinatorial applications by both transferring each problem model to the corresponding Ising model and by using the calculated Hamiltonian matrices.

The problem of the present disclosure, therefore, lies in providing enhanced techniques that allow for an optimized assignment of demanded frequencies to cells of a mobile communications network, thereby avoiding intra-cellular and inter-cellular interference and enhancing an optimized frequency usage within a network.

This problem is solved by a method according to claim 1. Further implementations are described in the dependent claims and in the following description.

The method is a computer-implemented procedure for optimizing an assignment of frequencies to cells of a mobile communications network, the cells being distributed for communication within the mobile communications network.

In the following we will refer to "unplanned cells" as mobile network cells defined by the coverage areas of antennae, which must get one or more frequencies assigned to them.

The method comprises the following steps:

- Specifying a set of unplanned cells in the mobile communications network,

- Specifying for each unplanned cell a set of frequencies to be potentially assigned to this unplanned cell,

- Calculating frequency interference probabilities of selected cell pairs, wherein each cell pair defines a relation of an unplanned cell to another cell within the mobile communications network,

- Formulating terms of a stress function, each term connecting a calculated frequency interference probability of a respective cell pair with a frequency relation between the cells of the respective cell pair,

- Determining, by using a quantum concept processor, an optimized assignment of frequencies by selecting for each unplanned cell a sub-set of frequencies from the respective set of frequencies, such that the stress function is minimized.

This method reliably tackles the problem of assigning frequencies to unplanned (or to be planned) cells in a communications network such that for most of (or ideally all) unplanned cells a required sub-set of selected frequencies can be assigned according to the cell's frequency demand. The assignment fulfils certain neighbourhood conditions between adjacent cells. Optionally, an overall frequency interference between the cells in the mobile communication network is minimized.

By applying the method, for every given unplanned cell, an optimal assignment of a sub-set of frequencies from the set of frequencies potentially to be assigned to this cell can be selected. The selection is automatically chosen such that intra-cellular and inter-cellular frequency interferences can be minimized and nevertheless a dense frequency usage over the whole frequency spectrum available within a network can be enhanced.

Each sub-set of frequencies reflects a certain demanded number of frequencies per cell or certain demanded frequencies of the frequency spectrum per cell. In other words this means that for a certain demand number of frequencies per cell a subset of the cell's frequency spectrum of that size (=cardinality) has to be determined. Frequencies here are defined as discrete frequency bands or channels, e.g. of a GSM network. Cells here are defined e.g. as a certain regional coverage of mobile communication by one or more antennae for radio communication. Depending on the transmission power characteristics and installation of an antenna as well as the topology of its surroundings, the areal coverage of the cell spanned by the antenna can vary.

An exemplary mobile communications GSM network comprises thousands of GSM cells and tens or hundreds of frequency bands or channels, wherein a small number of channels (approx. < 10, e.g. 2 to 6) is to be used per cell.

Frequency relations in this context describe frequency-dependent expressions defining a (potential) relation of one or more frequencies of one cell to one or more frequencies of the other cell of each respectively defined cell pair. For example, the frequency relations describe certain combinations of selected frequencies for both cells of a cell pair that may lead to an interference between the cells of the cell pair with the respectively calculated frequency interference probability.

The cell pairs in this context describe relations of each cell from the set of unplanned cells to another cell within the mobile communications network. The other cell can be a cell from the set of unplanned cells to which frequencies are to be assigned. Alternatively, the other cell can be a cell within the mobile communications network that is not within the selected set of unplanned cells. This may be e.g. a formerly planned cell with pre-assigned frequencies or a cell with fixed frequencies, which may stem for example from previous assignments.

For example, a frequency assignment FA can be described as a mapping from the set of cells to the power set (set of sub-sets) of the frequencies. A cell-pairwise interference probability can then be defined as real valued function on FA × FA assigning to each cell pair of "frequency assigned cells" a probability for disturbance. For the frequency assignment in total an interference probability can be defined (e.g. as the sum of pairwise interference probabilities for all non-diagonal pairs of FA × FA). This is not a probability itself (e.g. value can be > 1) but it can be taken as a degree of disturbance in the whole network. The method can be implemented to search in the set of all possible frequency assignments FA one with minimum interference probability. Further constraints can optionally be taken into consideration, which is explained further below.

By calculating frequency interference probabilities of selected cell pairs and formulating terms of a stress function, each term thereby connecting a calculated frequency interference probability of a respective cell pair with a frequency relation between the cells of the respective cell pair, a stress function (cost function) of the above-explained optimization problem can be constructed. Such stress function penalizes frequency relations that lead to significant interference between cells. The stress function and, hence, the underlying optimization problem is formulated as a quadratic unconstrained binary polynomial.

In this way, an optimized assignment of frequencies to unplanned cells is determined by selecting for each unplanned cell a sub-set of frequencies from the respective set of frequencies, such that the stress function is minimized. The minimum of the stress function preferably is a global minimum, but can also be a local minimum.

The method, hence, has the technical effect and advantage of an optimized coverage of cells with demanded numbers of frequencies for optimal per cell frequency utilization depending on the location and characteristics of the surroundings of the cells and depending on the requested demand, which is derived from the expected number and density of communication participants. Additionally, a minimization of interference can be reached in an optimal manner. Hence, user experience can be enhanced and degradation of communication quality or communication failure can be avoided. Moreover, costs for installation and maintenance of cells can be lowered, since a number of required cells may be reduced due to an optimized frequency assignment. Furthermore, the method has the effect and advantage that a solution of an optimized assignment of frequencies to unplanned cells is determined/calculated very fast which enables the possibility of a very quick re-planning/re-assignment of frequencies to respective cells.

The underlying optimization problem may be very complex. This is not only due to a potential impact of frequencies of one cell to frequencies of other cells. The problem is also very complex because there are many practical constraints that have to be taken into account. As more constraints are implemented, such problems become more complex and difficult to solve. This is problematic or difficult, if solutions are needed fast, for example if a frequency re-assignment to certain cells is required as a reaction to an unexpected network failure or during maintenance. But also under consideration of further practical constraints like neighbourhood relations between cells or a dense agglomeration of cells in so called "sectors", for example several antennae on a roof top within urban areas or cities, such calculations are difficult to solve. The herein described method advantageously shows its strength compared to conventional approaches more and more, the more complex the underlying problem is. In other words, for a complex optimization problem taking into consideration practical constraints as explained above, the herein described method has a significant strength over conventional techniques.

One advantage of the herein described procedure is the automatic solution of the optimization problem without manual adjustments, like the number of rings in the conventional approach as stated above. The runtime is shorter compared to the state of the art procedures and the solution quality is better, since more required frequencies can be reliably assigned to more cells in the network. The described procedure is a hybrid approach between pre-processing steps (formation of the set of unplanned cells and/or formation of the respective set of frequencies to be potentially assigned to each unplanned cell) and solution steps by quantum concept processors.

The herein described method makes use of an approach inspired by quantum computing. The calculation of optimized solutions of the stress function for determining an optimized assignment of frequencies to all cells of the set of unplanned cells is performed by a so-called quantum concept processor. As a quantum concept processor in the context of the present disclosure a processor is defined that solves a so called "Ising model" or the equivalent quadratic unconstrained binary problem. For example, this is a processor configured to solve an optimization problem by means of quantum annealing or quantum annealing emulation. Such a processor is for example based on conventional hardware technology, for example based on complementary metal-oxide-semiconductor (CMOS) technology. An example of such quantum concept processor is Fujitsu's digital annealer. Alternatively, any other quantum processors can be used for the herein described method, in future times also such technologies that are based on real quantum bit technologies. Further examples of such quantum concept processors are the quantum annealer of DWave (e.g. 5000Q), but also quantum gate computers (IBM, Rigetti, OpenSuperQ, IonQ or Honeywell) and their future successors or alternative QC designs making use of quantum optimization algorithms like Quantum Approximate Optimization Algorithm (QAOA) or Variational Quantum Eigensolver (VQE).

In other words, a quantum concept processor as defined herein is a processor which realises the concept of minimization of a so-called quadratic unconstrained binary optimization (QUBO) function, either on a special processor based on classic technology, a quantum gate computer or on a quantum annealer.

According to this application, the method further comprises the following steps:

- Specifying frequency variables, wherein each frequency variable is associated with one cell within the mobile communications network and one frequency for this cell,

- Formulating the frequency relations in the terms of the stress function as combinations of selected frequency variables, and

- Calculating the terms of the stress function, by using the quantum concept processor, to set the frequency variables, such that the stress function is minimized.

The frequency for the cell which a respective frequency variable is associated with is e.g. one frequency from the set of frequencies to be potentially assigned to this cell, if the cell is a still unplanned cell. Alternatively, such frequency is e.g. one frequency that has already been assigned to the cell, if the cell is planned already. In the latter case, the value of the frequency variable is a priori known, depending on whether the frequency is assigned to the cell (value one) or not (value 0). Such fixed variables do not have to be optimized by the quantum concept processor but may lead to restrictions for unplanned cells and thus be part of some linear terms of the stress function. The actual number of frequency variables to be optimized are only those coming from unplanned cells. For example, for n cells with m frequencies per cell, at least $n \times m$ frequency variables may be specified.

In this way, for each unplanned cell an optimal assignment of frequencies can be calculated individually by respectively setting the frequency variables, such that the stress function is minimized. This offers an elegant implementation of a very flexible and variable frequency assignment. Hence, different sub-sets of frequencies for different cells can be selected in order to avoid disturbing interference between the cells or a critical increase of interference in the network. Moreover, a dense frequency usage can be achieved over distributed cells throughout the network in an optimized manner.

The formulation of the frequency relations in the terms of the stress function as combinations of selected frequency variables allows for the calculation of an optimized solution (minimum) of the stress function for all unplanned cells in a flexible manner taking into consideration various frequency scenarios that may lead to different disturbing interference behaviours between the cells. In this way, an optimized selection of different sub-sets of frequencies for all unplanned cells can be achieved to minimize the cost function of the above-explained optimization problem. Hence, an impact of selected frequencies of one cell to other (potentially assigned) frequencies of other cells can be mitigated. This allows for a very high degree of freedom in the frequency assignment, which nevertheless is very complex to solve. An optimized selection of respective sub-sets of frequencies for all unplanned cells is performed by the quantum concept processor, as explained above.

In at least one implementation of the method, in the terms of the stress function only calculated frequency interference probabilities are considered that are below a predetermined threshold. Hence, the optimization only considers interference probabilities that do not exceed a certain limit. This prevents certain frequencies to be assigned to certain cells which may lead to intolerable interference between these cells. For example, interference probabilities exceeding the threshold are avoided by penalty terms which are forced to zero for an optimum solution by a large prefactor.

In at least one implementation, the method is performed under consideration of a frequency demand condition such that each sub-set of frequencies assigned to an unplanned cell has a specified number of frequencies. One frequency is defined as control channel frequency and the other frequencies are defined as traffic channel frequencies. In different implementations, the control channel frequency can be exactly one or at least one frequency of each cell. The number of frequencies to be assigned to a respective cell is e.g. preselected or predetermined, for example under consideration of the topology of the mobile communications network, location and/or cellular characteristics of each cell (depending on power transmission performance and/or topology of surroundings of the cell) as well as the number and density of participants that want to dial into the cell for mobile communication.

According to the frequency demand condition, each cell must be assigned one control channel frequency. One control channel frequency is necessary for each cell and serves the purpose of providing a control channel for the cell via which signalling and control information is exchanged between the cell and other cells or the cell and different network elements, terminals or participants. In the case that the mobile communications network is implemented according to the GSM standard, such control channel frequency e.g. is a so-called broadcast channel (BCCH) frequency according to the GSM standard. Further according to the frequency demand condition, the other frequencies assigned to the cell are defined as traffic channel frequencies. This serves the purpose of providing one or more traffic channels for the cell over which communication traffic, like data or voice, is transmitted and exchanged between the cell and other cells or the cell and different network elements, terminals or participants. In the case that the mobile communications network is implemented according to the GSM standard, such traffic channel frequencies e.g. are so called transmission channel (TCH) frequencies according to the GSM standard.

In terms of communication control between the cells in the mobile communications network, the control channels have a more fundamental role than the traffic channels. In certain implementations, control channels are configured to also transmit communication traffic besides signalling and control information. In other implementations, control channels are configured to only transmit signalling and control information.

In at least one implementation, the method is performed under consideration of a frequency combiner distance condition that for each unplanned cell forbidden frequency relations are defined such that the frequencies of the sub-set of frequencies assigned to this cell have frequency relations with a certain channel distance. For example, the channel distance is equal to or greater than two. The frequency combiner distance condition, hence, has the effect that an intra-cell frequency interference can be minimised or completely avoided, since the frequencies used by each cell have to meet a certain channel distance to each other.

In at least one implementation, the method is performed under consideration of a cell neighbourhood condition such that for those cells which have a determined (handover) neighbourhood relation forbidden frequency relations between these cells are defined. The neighbourhood relation, in particular, relates to neighbouring cells (for example selected cell pairs or a plurality of cells) that provide an overlap in their area coverage. This is important in view of a so-called handover between neighbouring cells. If a participant during ongoing usage of the mobile communication network moves away from the antenna (centre) of one cell, its transmission level decreases. As soon as the participant reaches the area of the next neighbouring cell, the participant must be handed over from the first cell to the second cell in order to continue usage of the mobile communication network. If in such a scenario certain frequency relations were used, the inter-cell frequency interference between such neighbouring cells would increase beyond a critical limit. In such case, necessary calculations for a handover may be disturbed by interference and can be erroneous or fail, there being a risk that the handover fails and the participant is confronted with an aborted communication in the mobile communication network. The cell neighbourhood condition hence defines forbidden frequency relations between neighbouring cells in order to avoid critical frequency interference between these cells and, in particular, prevent potential drawbacks of handover failure.

In at least one implementation, the method is performed under consideration of a cell sector condition that for those cells which have a determined sector relation forbidden frequency relations between these cells are defined. The cell sector relation, for example, relates to cells within a predetermined dense installation area or location, where multiple antennae of different cells are installed close to each other, e.g. on a roof top, in a street or in a dense urban area, etc. Here, inter-cell interference may be significant due to the dense installation and overlap of the different cells. In a sector, therefore, forbidden frequency relations between cells are very important to prevent communication failure. The cell sector condition may be more restricting than the cell neighbourhood condition, which means that the cell sector condition defines stricter rules for forbidden frequency relations than the cell neighbourhood condition.

In at least one implementation, the method is performed under consideration of a frequency interference probability condition such that forbidden frequency relations between the cells of those cell pairs in the mobile communications network are defined whose frequency interference probabilities are above a predetermined threshold. In this way, an inter-cell frequency interference can be kept in tolerable limits over the whole network to prevent adverse effects leading in the worst case to communication failure. Even if an overall assignment of frequencies results in an increased interference probability between some cells or in certain regions of the network after all unplanned cells have been planned and assigned their sub-sets of frequencies, the local and global interference probability can nevertheless be kept in tolerable limits.

In at least one implementation of the method, the frequency relations of the kinds explained above distinguish between co-channel frequency relations and adjacent channel frequency relations. The co-channel frequency relations consider frequencies of a same channel. The adjacent channel frequency relations consider frequencies of adjacent channels. Adjacent channels mean directly neighbouring frequency channels. For example, channels f3 and f4 are adjacent channels, whereas channels f3 and f5 are not adjacent channels.

In this implementation, co-channel and adjacent channel frequencies are considered to contribute to interference within one cell or between respective cell pairs. Generally, co-channel frequencies have high impact on interference, since the frequencies use the same channel. If frequencies of adjacent channels are used, the impact on interference is not so high, compared to co-channel frequencies. However, also between frequencies of adjacent channels, interference can be problematic, since such frequencies have a small frequency distance (frequency band distance is small). If, for example, two or more of the frequencies assigned to one cell were co-channel or adjacent channel frequencies, high interference would pose a problem and heavily affect communication quality of this cell or result in communication failure. Analogously, if two cells with a certain relation, e.g. a neighbourhood or sector relation as explained above, used two or more co-channel or adjacent channel frequencies, interference may significantly increase regarding these cells, which may also affect communication quality or lead to communication failure. Further, if two cells used two or more co-channel or adjacent channel frequencies and the calculated frequency interference probability of at least one of these cells towards the other one is above a predetermined threshold for one or more of these frequencies, interference may also increase beyond a tolerable limit and communication quality may decrease.

Hence, an assignment of co-channel or adjacent channel frequencies within a cell or to cell pairs with a certain cell relation or with a certain frequency probability lying above a tolerable limit is to be avoided. Otherwise, an assignment of co-channel or adjacent channel frequencies may be admitted to cell pairs, if their interference lies within tolerable limits.

The differentiation between co-channel frequency relations and adjacent channel frequency relations allows the definition of different degrees of freedom in the frequency assignment regarding different intra-cell and inter-cell frequency scenarios depending on what degree of interference may be tolerable or not. For example, for different ones of the frequency combiner distance condition, cell neighbourhood condition, cell sector condition or frequency interference probability condition, as explained above, different forbidden frequency relations can be defined, each comprising different combinations of co-channel and adjacent channel frequency relations.

In at least one implementation of the method, the frequency relations distinguish between control channel frequencies and traffic channel frequencies. Control channel frequencies and traffic channel frequencies may be defined as explained above. Depending on the intra-cell or inter-cell frequency assignment and depending on the relations between respective cell pairs, control channel frequencies and traffic channel frequencies each may have different significance regarding a negative impact caused by frequency interference. For example, in the case that the control channels have a more fundamental role than the traffic channels, the respective frequency relations can be defined such that an optimized frequency assignment keeps interference impact regarding control channel frequencies in a limit smaller than the tolerable interference limit regarding traffic channel frequencies.

Hence, the differentiation between control channel frequencies and traffic channel frequencies in the respective frequency relations allows the definition of different degrees of freedom in the frequency assignment regarding different intra-cell and inter-cell frequency scenarios depending on the different significance of control channels and traffic channels and what degree of interference may be tolerable for both or not. For example, for different ones of the frequency combiner distance condition, cell neighbourhood condition, cell sector condition or frequency interference probability condition, as explained above, different forbidden frequency relations can be defined, each comprising different combinations of control channel frequencies and traffic channel frequencies.

In at least one implementation considering at least one of the frequency demand condition, frequency combiner distance condition, cell neighbourhood condition, cell sector condition or frequency interference probability condition, as explained above, the method further comprises the following steps:

- Specifying frequency variables, wherein each frequency variable is associated with one cell within the mobile communications network and one frequency for this cell,

- Formulating the frequency relations of the respective condition as terms of selected frequency variables,

- Calculating the frequency relations of the respective condition, by using the quantum concept processor, to set the frequency variables, such that the respective frequency relations become zero.

In this way, the respective condition can be flexibly modelled and optimized by using the quantum concept processor to respectively set the frequency variables, such that the respective condition is fulfilled if possible. This offers an elegant implementation of the respective condition as a (hard) constraint to the optimization problem formulated in the stress function. By considering such constraints in the formulation or calculation of the stress function, solutions of the optimization problem can be penalized that contravene the above conditions. This enables finding suitable optimized solutions considering practical constraints of the actual network conditions of the communications network. The frequency variables used in formulating the frequency relations of the respective condition can be partially or fully those frequency variables used in formulating the terms of the stress function as explained above.

In at least one implementation of the method, the calculated frequency interference probabilities of respective cell pairs distinguish between co-channel frequency interference probabilities and adjacent channel frequency interference probabilities. The co-channel frequency interference probabilities are calculated for frequencies of a same channel between the cells of respective cell pairs and the adjacent channel frequency interference probabilities being calculated for frequencies of adjacent channels between the cells of respective cell pairs. In this way, different interference probabilities can be calculated and considered depending on the different interference characteristics of co-channel or adjacent channel frequencies, as explained above in the context of co-channel or adjacent channel frequency relations.

In at least one implementation of the method, the stress function is formulated as a quadratic unconstrained binary optimization (QUBO) function. This QUBO function serves as "input" for the quantum concept processor that solves this optimization problem for an optimized assignment of frequencies according to the above-explained method. Generally speaking, QUBOs are quadratic order polynomials in binary variables which are represented in a quantum concept processor as bits or quantum bits (Q-bits hereinafter). In the context of the optimization problem of the present disclosure, the QUBO function represents the sum of potential contributions of the calculated frequency interference probabilities of respective cell pairs as a function of different Q-bits. Each Q-bit represents the selection of one frequency of one cell and can attain the value "0" or the value "1" (or both with a certain probability). In order to solve the optimization problem, the quantum concept processor runs through different settings of the different Q-bits in order to find such solution(s) that minimize the optimization problem. In this way, a QUBO representation of the optimization problem has elegant properties regarding the here applied quantum concept computing. For example, the above explained frequency variables are formulated in the form of such Q-bits.

In at least one implementation of the method, the stress function and one or more of the above explained conditions are combined into a global QUBO function. In the global QUBO function, hence, one or more of the above-explained constraints and the optimization target can be considered. In this regard, one or more of the above-explained constraints can be weighted within the QUBO function as soft constraints. In this regard, soft constraints are constraints that are desired but do not have to be met if the cost function attains a substantially better value. This has the advantage that the QUBO function can be somewhat fine-tuned depending on the focus of the optimization problem either on the optimization of the frequency assignment to the cells throughout the network with respect to interference probabilities or on the fulfilment of one or more of the mentioned (soft) constraints.

In at least one implementation, the method further comprises the following steps:

- Specifying a subset of unplanned cells from the set of unplanned cells,

- Performing the method for the subset of unplanned cells,

- Updating the cells in the subset to planned cells with their determined optimized assignment of frequencies, and

- Iteratively performing the method for the remaining unplanned cells of the set of unplanned cells until all unplanned cells of the set of unplanned cells are processed.

In this way, a kind of decomposition strategy can be followed. This has the advantage of or is even necessary for processing the explained method despite limited hardware performance of the quantum concept processor for solving the optimization problem. Let's assume a high number of required frequency variables to formulate the optimization problem and/or one or more of the additional conditions/constraints, as explained above. Nowadays, the possibilities of current quantum concept processors are still limited. Hence, the very complex optimization problem has to be decomposed into several partial solutions that can be iteratively processed to find an optimal solution. In each iteration one partial solution is found by the quantum concept processor.

For example, the hardware limitations manifest themselves under consideration of a QUBO formulation of the optimization problem, as explained above, where the number of required bit variables (Q-bits) to formulate the optimization problem depends e.g. on the number of cells and the number of frequencies (potentially assigned or already planned) to each cell. Hence, for n unplanned cells with m frequencies per cell, at least $n \times m$ Q-bits must be specified. Q-Bits for already planned cells can be set constant. In case that for each frequency additionally a control channel and traffic channel characteristic is to be distinguished in the respective frequency relations, the number of required Q-bits further increases to $2 \times n \times m$, since $n \times m$ Q-bits for a control channel frequency assignment and $n \times m$ Q-bits for a traffic channel frequency assignment must be specified.

For example, considering a GSM communications network that may comprise thousands of GSM cells to be planned and tens or hundreds of frequency bands or channels, the number of required Q-bits may quickly reach a dimension of hundreds of thousands. Taking further into account that a typical quantum concept processor nowadays can solve optimization problems in the order of 10.000 bit variables (Q-bits), the overall optimization problem has to be solved iteratively with the help of a problem decomposition by the above-explained measures.

According to an exemplary strategy for specifying/building the subset of unplanned frequencies, the following steps are performed. In a first step candidates of unplanned cells are sorted/prioritized in a descending order according to the number of certain constraints or cell relations with regard to already planned cells. For example, first those one or more unplanned cells are considered, which have the most cell relations to already planned cells or whose frequency assignment procedure is influenced the most by constraints of already planned cells in terms of potential frequency interference. This has the advantage that initially those one or more unplanned cells are considered whose planning (frequency assignment) is most restricted by the interference characteristics to already planned cells in the network. These unplanned cells are then included first in the subset of unplanned cells.

In a second step, further candidates of unplanned cells are selected according to certain constraints or cell relations with regard to cells that are already included in the subset of unplanned cells. This has the advantage that in the second step those further unplanned cells are considered whose planning (frequency assignment) might have the most impact regarding the interference characteristics to cells which are already in the subset of unplanned cells. These unplanned cells are then included in the subset of unplanned cells, too.

The first and/or the second steps are iteratively performed until an upper limit of frequency variables (Q-bits) is reached that can be calculated at a time by the quantum concept processor. Then, the method according to the above-explained implementations is performed for the built subset of unplanned cells. After the frequency assignment has been calculated for the subset of cells, these are updated to planned cells with their determined optimized assignment of frequencies. Subsequently, the method is iteratively performed for the remaining unplanned cells of the set of unplanned cells until all unplanned cells are processed.

The above-mentioned problem is also solved by a quantum concept processor as claimed in the enclosed claims. The quantum concept processor is configured for performing one or more steps of a method as described above. According to an exemplary implementation, the quantum concept processor is a digital annealing processing unit. This unit can be specially configured to perform quantum annealing or a quantum annealing emulation as explained above. The quantum concept processor can be of any type explained above.

Moreover, the above-mentioned problem is also solved by a computer program comprising instructions that, when the program is executed by one or more processors, cause each of the one or more processors to perform the steps of a method as described above. At least one of these processors is e.g. a quantum concept processor as explained above. Other processors can be configured for processing, by executing the computer program, preparatory or iterative steps of or for a method as explained above. The computer program can be stored on a computer-readable storage medium.

Moreover, the above-mentioned problem is also solved by a workplace for a network planner, configured for verifying an optimized assignment of frequencies determined by a method as described above. Such a workplace, for example, has verification means that are configured for an (automated or semi-automated) verification of an optimized assignment of frequencies determined by a method as described above. This serves a network planner to verify optimization results found by a method as described above. The verification means can be implemented in software and/or hardware. For example, the workplace can communicate or be connected to a system comprising a quantum concept processor that performs the method as described above. The results can then be taken over into the workplace.

Moreover, the above-mentioned problem is also solved by an interface arrangement comprising one or more interfaces to cells of a mobile communications network, the cells being distributed for communication within the mobile communications network, wherein the interface arrangement is configured to automatically deploy an optimized assignment of frequencies determined by a method as described above to the cells of the mobile communications network. In this way, an optimized assignment of frequencies determined by a method as described above can be (automatically or semi-automatically) be deployed to a plurality of cells of a respective mobile communications network. For example, the interface arrangement can communicate or be connected to a workplace as describe above or to a system comprising a quantum concept processor that performs the method as described above. The results can then be taken over into the interface arrangement.

Moreover, as preparatory measure for one or more of the above-explained steps of the computer-implemented procedure, an interface can be implemented or used for reading out parameters from the communications network before a respective optimization and for inputting such parameters into the explained computer-implemented optimization procedure. In this way a closed loop continuous optimization is possible. The parameters for example comprise a network configuration, adjacency information or relations of respective cells of the network, available frequencies in the network and frequency demands of respective cells to be expected.

Any aspects, features, effects and measures described alone or in combination with each other in the context of the method explained above can be applied to or find analogous representation in aspects, features, effects and measures described alone or in combination with each other in the context of the quantum concept processor, the computer program, workplace and interfaces explained above, and vice versa.

The invention is further described below under consideration of several implementations with the aid of multiple drawings.

Figure 1      shows an exemplary configuration of a communications network with a plurality of cells;

Figure 2      shows an exemplary frequency assignment to one cell of the network according to figure 1;

Figure 3a      shows an exemplary schematic illustration of a cell neighbourhood condition between an exemplary pair of cells of the network according to figure 1;

Figure 3b      shows an exemplary schematic illustration of a cell sector condition between exemplary cells of the network according to figure 1;

Figure 4      shows an exemplary schematic illustration of a frequency interference probability condition between an exemplary pair of cells of the network according to figure 1;

Figures 5 to 11      show exemplary mathematical formulations of partial optimization problems;

Figure 12      shows an exemplary schematic illustration of a frequency assignment algorithm.

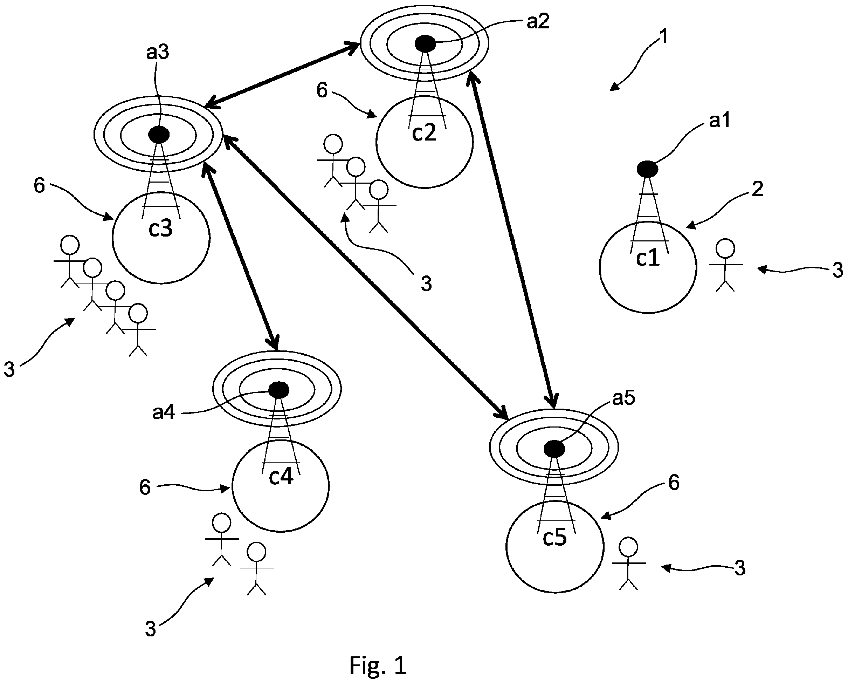

Figure 1 shows an exemplary configuration of a part of a communications network 1 with a plurality of cells. For example, the communications network 1 is a GSM network and comprises approximately 50.000 GSM cells. Exemplary illustrated in Figure 1 are cells c1 to c5. Each of the cells c1 to c5 has an antenna a1 to a5, respectively. Hence each cell c1 to c5 spans a region of coverage of mobile radio communication by the respective antenna a1 to a5. Depending on the transmission power characteristics and installation of an antenna a1 to a5 as well as the topology of its surroundings, the areal coverage of the cells c1 to c5 spanned by the antennas a1 to a5 can vary.

In the exemplary configuration of Figure 1, each of the cells c2 to c5 provide a communication node for participants 3 (mobile phones and other cellular or radio communication devices) that may connect to a respective cell through radio communication over certain frequencies. Each cell c2 to c5 covers a certain area for mobile communications networking. Frequencies are discrete frequency bands or channels. For example, the communications network 1 comprises 100 frequency channels, wherein approximately three to five channels are used per cell. If hopping is used, the channels to be used per cell may be 1 to 12, for example. In the exemplary configuration of Figure 1, cells c2 to c5 each uses certain frequencies assigned to the respective cell. The frequencies are assigned to the cells c2 to c5 such that an interference (signal disturbance) between the cells c2 to c5 (see arrows between cells c2 to c5 in Figure 1) can be avoided or at least kept as low as possible.

In contrast to the cells c2 to c5, the cell c1 of Figure 1 does not have frequencies already assigned to this cell. This means that cell c1 is an unplanned cell 2, whereas the other cells c2 to c5 are each planned cells 6. Cell c1, however, is to be assigned certain frequencies, such that also between cell c1 and other cells c2 to c5 an interference (signal disturbance) can be avoided or at least kept as low as possible and, hence, cell c1 also becomes a planned cell.

In this regard, a frequency assignment procedure is performed according to which an automated, computer-implemented frequency assignment to unplanned cells 2 within the communications network 1 is executed. An optimization target of such a frequency assignment lies in minimization of frequency interference as best as possible between respective cells of the communications network 1, thereby still allocating a required number of frequency channels to as many unplanned cells as possible.

The number of frequency channels required for each cell depends on the number of mobile communication participants 3 that aim to dial into the network 1 and use the communications topology of the communications network 1. As illustrated in the exemplary configuration according to Figure 1, the cells c1 and c5 are associated with the smallest number of participants 3. For example, cells c1 and c5 are located in a rural region without a dense communication demand. Cell c4 requires more participants 3 than cells c1 and c5. Cell c4, for example, is located in a town where a small demand for communications is present. In contrast, cells c2 and c3 each have the highest number of participants 3 that wish to use the communications network 1. Cells c2 and c3 are, for example, installed in cities with dense urban infrastructure. In the exemplary configuration of Figure 1, therefore, cells c1 and c5 require the smallest number of frequency channels, whereas cells c2 and c3 require the highest number of frequency channels.

Regarding cell c1, frequencies are to be assigned to this unplanned cell 2 such that cell c1 causes as little frequency interference as possible to the other cells within communications network 1, but still gets the required number of channels in order to provide a mobile communication node for the participants 3, requesting communication within cell c1. In other words, the optimization problem to be solved regarding cell c1 lies in determining an optimized frequency assignment to cell c1 (and potentially to other cells c2 to c5, if a frequency re-assignment is considered for these cells) in the communications network 1. This means that, for the respective cell c1 (and potentially other cells), a sub-set of frequencies from a respective set of potential frequencies is selected, such that a mathematically formulated quadratic stress function (core optimization problem) is minimized. This serves the purpose, and has the technical effect, of choosing respective sub-sets of frequencies that meet the required frequency demands of each unplanned cell 2 in the network 1, depending on the number of participants 3 per cell, combined with the effect that an intra-cellular and/or an inter-cellular frequency interference can be minimized and nevertheless dense frequency usage over the whole frequency spectrum available within the network 1 can be enhanced. This has the effect that user experience can be enhanced and degradation of communication quality or communication failure can be avoided, thereby still enabling the participation in and usage of the communications network 1 by as many participants as possible. The sub-set of frequencies assigned to each unplanned cell can be selected out of a predetermined set of frequencies that can potentially be assigned to an unplanned cell 2, in Figure 1 exemplarily cell c1 (and potentially other cells).

In order to achieve the above advantageous effects, a computer-implemented algorithmic method for optimizing the frequency assignment to unplanned cells 2 within the communications network 1 is implemented. This is further explained below. In addition to such a core optimization problem, additional partial optimization problems are taken into account which represent conditions (constraints) to be met in the optimization process. These constraints consider that there are certain intra-cell and inter-cell frequency relations and certain cell relations that influence the assignment of frequencies to each cell in terms of an optimized minimization of frequency interference and a fulfilment of the required frequency demand per unplanned cell 2. Such conditions and constraints are explained in the following.

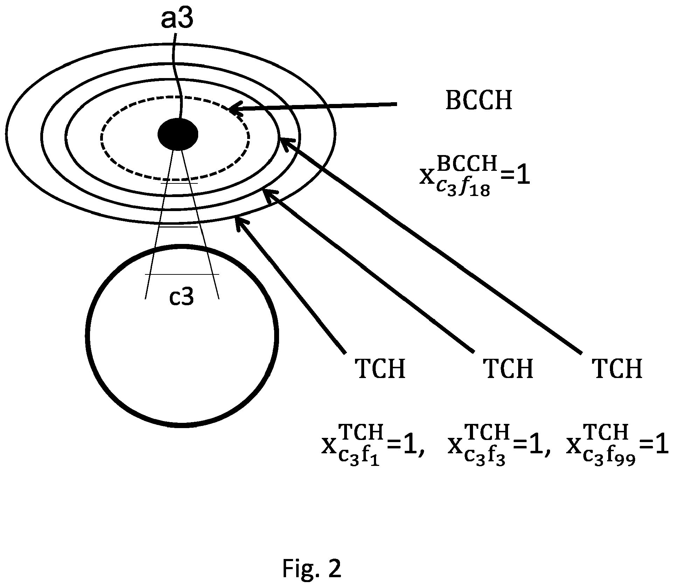

Figure 2 shows an exemplary configuration of the cell c3 to which predetermined frequencies are assigned. Cell c3, thereby, meets certain conditions which are also applicable to and must be met by the other cells within the communications network 1, in particular with regard to unplanned cells 2 to which frequencies are to be assigned.

Figure 2 illustrates a differentiation between two basic types of frequencies to be used within the cells of the communications network 1. These two types of frequencies distinguish so-called broadcast channel, BCCH, frequencies and traffic channel, TCH, frequencies. In the exemplary configuration as here described, one BCCH frequency must be assigned to each cell. The BCCH frequency is necessary for each cell and serves the purpose of providing a control channel for the cell via which signalling and control information is exchanged between the cell and other cells or the cell and different network elements, terminals or participants. The TCH frequencies serve the purpose of providing one or more traffic channels for each cell over which communication traffic, like data or voice, is transmitted and exchanged between the cell and other cells or the cell and different network elements, terminals or participants. The BCCH frequencies can be configured to also transmit a part of the communication traffic in the communications network besides the signalling and control information. Alternatively, the BCCH frequencies are configured to only transmit signalling and control information. For example, a signal transmission of different participants 3 in the network 1 (see Figure 1) is configured as time-multiplexing transmission, wherein each participant using a respective frequency of a respective cell is assigned a time slot (e.g. in the range of milliseconds) in which signalling assigned to this participant is transmitted.

As exemplarily illustrated for cell c3 in Figure 2, each cell within the communications network 1 has to meet a certain frequency demand of the respective cell. As explained above, such a frequency demand depends on the number of participants 3 dialling into the communications network 1 and may also depend on the topology of the mobile communications network 1, location and/or cellular characteristics of each cell (depending on power transmission, performance and/or topology of surroundings of the cell). The frequency demand defines a number of frequencies to be assigned to a respective cell. This number can be preselected or predetermined depending on the above-explained parameters. As exemplarily illustrated in Figure 2, cell c3 has a frequency demand of four, which means that four frequencies are to be assigned to cell c3. As explained, one frequency is a BCCH frequency. In the example of Figure 2, frequency f18 is assigned as BCCH frequency of cell c3. Moreover, the rest of the assigned frequencies, which means the other three frequencies here, are assigned as TCH frequencies. In the example of Figure 2, frequencies f1, f3 and f99 are assigned as TCH frequencies to cell c3.

As further illustrated in Figure 2, certain frequency variables $x_{cf}$ are defined which, depending on the characteristics of a frequency being a BCCH frequency or a TCH frequency, are associated with one cell c within the mobile communications network 1 and one frequency f for this cell c. A frequency variable $x_{cf}$ here attains the value "0" if the respective frequency f is not assigned to the respective cell c, and attains the value "1" if the respective frequency f is assigned to the respective cell c. As exemplarily illustrated in Figure 2, the frequency variable $x_{c3f18}^{BCCH} = 1$, since frequency f18 is assigned to cell c3 as BCCH frequency. The other three frequency variables are also set to $x_{c3f1}^{TCH} = 1$, $x_{c3f3}^{TCH} = 1$ and $x_{c3f99}^{TCH} = 1$, since, as explained before, the frequencies f1, f3 and f99 are assigned as TCH frequencies to cell c3. All other frequency variables $x_{c3f}$ for cell c3 are "0".The formulation in terms of such frequency variables serves the purpose of a mathematical formulation of the above-mentioned constraints and the above-mentioned core optimization problem that is further explained below.

In addition to a frequency demand condition, cell c3 as exemplarily illustrated in Figure 2, must also meet a so-called frequency combiner distance condition. This means that for each cell c, in particular for each unplanned cell 2, forbidden frequency relations are defined such that the frequencies f assigned to each cell have a certain channel distance. In the configuration as exemplarily illustrated with regard to Figure 2, such channel distance may have, for example, the value ≥ 2. This means that each frequency f assigned to a respective cell must have a frequency distance of ≥ 2 to other frequencies f of the cell. This requirement describes that so called co-channel frequencies and adjacent channel frequencies are forbidden for each cell. Co-channel frequencies relate to frequencies f of a same channel and adjacent channel frequencies relate to frequencies f of adjacent channels. This serves the purpose of avoiding intra-cell interference between the frequencies assigned to each cell. As exemplarily illustrated for cell c3 in Figure 2, also the frequency combiner distance condition is fulfilled, since all frequencies f1, f3, f18 and f99 have a distance of ≥ 2.

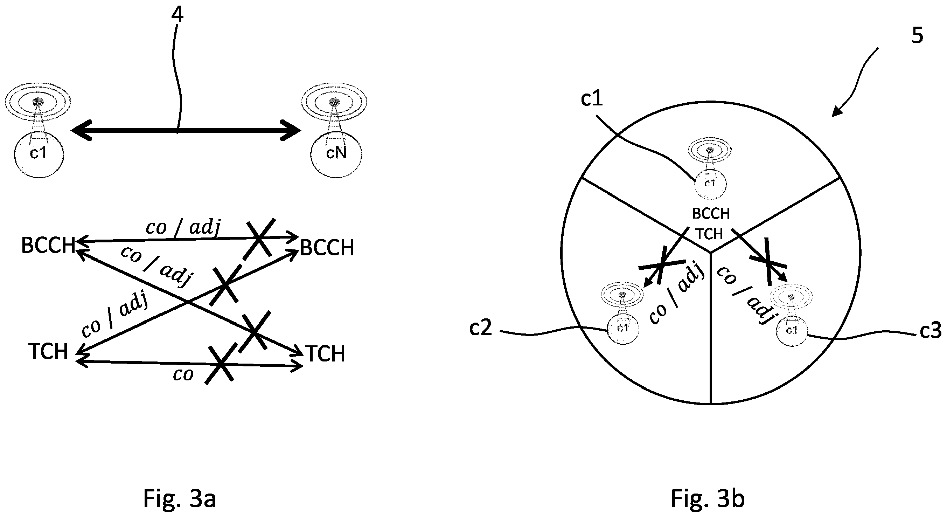

Figure 3a exemplarily illustrates a further condition which must be fulfilled as an additional constraint. Figure 3a illustrates a so-called cell neighbourhood condition, which means that for those cells c which have a determined neighbourhood relation 4, forbidden frequency relations between these cells c are defined. As exemplarily illustrated in Figure 3a, cells c1 and cN are considered to be in a neighbourhood 4. Hence, such a neighbourhood relation 4 here describes neighbouring cells that provide an overlap in their area coverage. For the cells c within a neighbourhood 4, certain combinations of frequencies are forbidden from being assigned to the respective cell pair. As exemplarily illustrated in Figure 3a, a BCCH frequency of cell c1 must not be a co-channel (co) or adjacent channel (adj) frequency of the BCCH frequency of cell cN. Moreover, the BCCH frequency of cell c1 must not be a co-channel or adjacent channel frequency of a TCH frequency of cell cN. Moreover, a TCH frequency of cell c1 must not be a co-channel or adjacent channel frequency of the BCCH frequency of cell cN. Last but not least, a TCH frequency of cell c1 must not be a co-channel frequency of a TCH frequency of cell cN. Nevertheless, in the latter case, a TCH frequency of cell c1 can be an adjacent channel frequency to another TCH frequency of cell cN. In other words, TCH frequencies of neighbouring cells must not be co-channel frequencies, but can be adjacent channel frequencies.

The cell neighbourhood condition serves the purpose of ensuring a reliable handover of certain mobile communication participants travelling between the area coverage of neighbouring cells. If a participant moves away from the antenna (centre) of one cell during ongoing usage of the mobile communications network, for example cell c1 in Figure 3a, its transmission level decreases. As soon as the participant reaches the area of the next neighbouring cell, here for example cell cN, the participant must be handed over from cell c1 to cell cN. For this purpose, continuous signal measurements are necessary to change between frequencies of cells c1 and cN. If interference between cells c1 and cN was high, such measurements would fail and, consequently a handover might also fail, which leads to abort of communication. The frequency relations, as defined by the cell neighbourhood condition explained above, ensure that the frequency interference between neighbouring cells, in Figure 3a exemplary c1 and cN, is kept in tolerable limits such that the handover between neighbouring cells is reliably guaranteed or a handover failure risk is kept below a tolerable limit.

Figure 3b exemplarily illustrates a further condition, named cell sector condition. Here, exemplarily, cells c1, c2 and c3 are located within a certain sector 5. The sector 5, for example, defines a predetermined dense installation area or location, where multiple antennae of different cells, c1 to c3 in this example, are installed close to each other, for example on a rooftop, in a street or in a dense urban area. The cell sector condition may define more restricting frequency relations than the cell neighbourhood condition as explained with regard to Figure 3a above. This means that the cell sector condition according to Figure 3b may define stricter rules for forbidden frequency relations between respective cells (cell pairs) than the cell neighbourhood condition.

With regard to Figure 3b, as exemplarily illustrated, the BCCH and TCH frequencies of one respective cell, here for example cell c1, must not be a co-channel (co) or adjacent channel (adj) frequency of the frequencies of the other cells, here for example cells c2 or c3. This means that all frequencies of cell c1 must have a frequency distance to all other frequencies of cells c2 and c3 with a value of $\geq 2$. The cell sector condition, hence, serves the purpose of avoiding inter-cell interference which may be significant due to the dense installation and overlap of different cells in the sector 5.

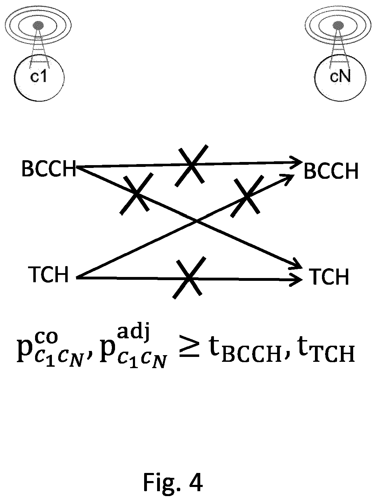

Figure 4 exemplarily illustrates a further condition which is to be met. This further condition is a so-called frequency interference probability condition, which means that forbidden frequency relations between the cells of those cell pairs in the mobile communications network are defined whose frequency interference probabilities p are above a predetermined threshold t. In the exemplary illustration of Figure 4, the cell pair of cells c1 and cN is regarded. Moreover, it is distinguished between a co-channel frequency interference probability $p_{c1cN}^{co}$ and an adjacent channel frequency interference probability $p_{c1cN}^{adj}$. Moreover, it is distinguished between a threshold for the BCCH frequency $t_{BCCH}$ and a threshold for the TCH frequencies $t_{TCH}$. In the case that one or both of the co-channel frequency interference probability and the adjacent channel frequency interference probability is greater than or equal to one of the thresholds, such that

$$p_{c1cN}^{co}, p_{c1cN}^{adj} \geq t_{BCCH}, t_{TCH}$$

, certain frequency relations are forbidden respectively. This means that the BCCH frequency of cell c1 must not be the BCCH frequency of cell cN, either regarding the co-channel or the adjacent channel frequency, depending on whether one or both of the respective frequency interference probabilities is equal to or greater than the respective threshold $t_{BCCH}$. Moreover, the BCCH frequency of cell c1 must not be a TCH frequency of cell cN, either regarding co-channel or adjacent channel frequencies, depending on whether one or both of the respective frequency interference probabilities is equal to or greater than the respective threshold $t_{BCCH}$. Analogously, a TCH frequency of cell c1 must not be the BCCH frequency of cell cN, either regarding co-channel or adjacent channel frequencies, depending on whether one or both of the respective frequency interference probabilities is equal to or greater than the respective threshold $t_{TCH}$. Finally, a TCH frequency of cell c1 must not be a TCH frequency of cell cN, regarding either of co-channel or adjacent channel frequencies, depending on whether one or both of the respective frequency interference probabilities is equal to or greater than the respective threshold $t_{TCH}$. The analogous restrictions apply for the interchanged roles of c1 and cN and the interference probabilities $p_{cNc1}^{co}, p_{cNc1}^{adj}$.

In this way, an inter-cell frequency interference must be within tolerable limits between respective cell pairs, here exemplarily between cell pair c1 and cN, to prevent adverse effects leading, in the worst case, to communication failure. Even if an overall assignment of frequencies results in an increased interference probability, $p^{co}$ or $p^{adj}$, between some cells or in certain regions or areas of the network after all unplanned cells have been planned and assigned their respective frequencies, the interference probability can nevertheless be kept within tolerable limits, since it is avoided that the respective frequency interference probabilities are equal to or greater than predetermined thresholds $t_{BCCH}$ and $t_{TCH}$ for respective BCCH and TCH frequencies.

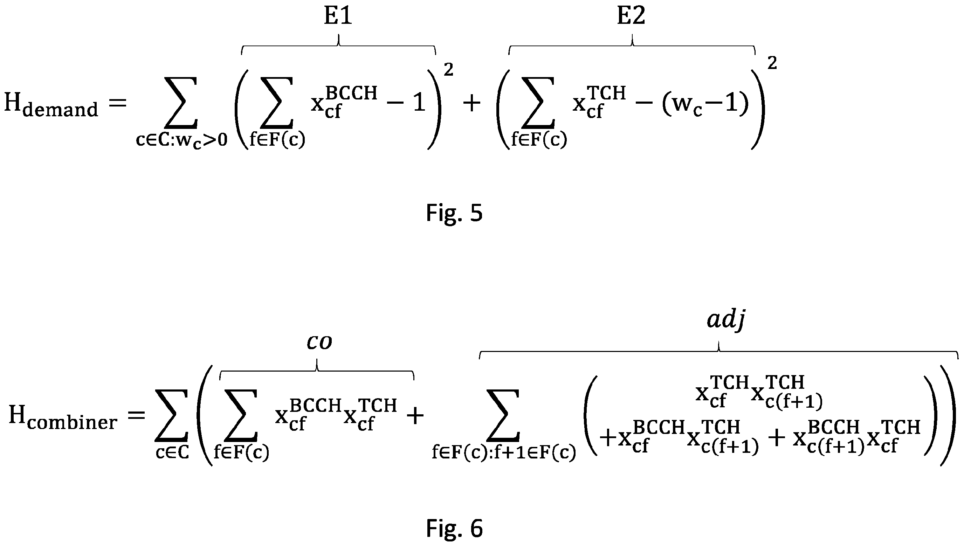

Figures 5 to 9 show exemplary mathematical formulations of the conditions/constraints as explained above. In this regard, the following nomenclature is defined:

F={0,1,...,M}: set of all frequencies
C={0,1,...,N}: set of all cells
SEC⊂C×C: tuples of cells which have sector relations
NB⊂C×C: tuples of cells which have neighbourhood relations.

$$x_{cf}^{BCCH} = x_{cf}^{TCH} = 0$$

∀c∈C and VfEF\F(c): as fixed bits.

The mathematical formulations of Figures 5 to 9 are represented as so-called Hamiltonian functions, abbreviated to Hamiltonians, and represent QUBO formulations of Q-Bits as explained above.

The mathematical formulation of Figure 5 formulates the frequency demand condition as explained above with regard to Figure 2. The mathematical formulation in Figure 5 is formulated as summed terms containing binary frequency variables $x_{cf}^{BCCH}$ and $x_{cf}^{TCH}$ for respective BCCH and TCH frequencies that can attain the value "0" or the value "1" (or both with a certain probability) and are represented in a quantum concept processor as bits (or Q-bits as used hereinafter). Hence, the binary frequency variables according to Figure 5 are configured as explained above in view of Figure 2. For each cell c of the set of all cells C within the network 1 and for each frequency f of the frequencies F(c) to be potentially assigned to each cell c a respective Q-bit can be set. If the respective frequency shall be a BCCH frequency, the Q-bit $x_{cf}^{BCCH}$ is respectively set. Otherwise, if a respective frequency shall be a TCH frequency, the respective Q-bit $x_{cf}^{TCH}$ is respectively set. The respective Q-bit $x_{cf}^{BCCH}$, $x_{cf}^{TCH}$ is set to the value "1" if a respective frequency is set accordingly. The respective Q-bit $x_{cf}^{BCCH}$, $x_{cf}^{TCH}$ is set to the value "0", if not.

Considering the formulation of the Hamiltonian of Figure 5, the Hamiltonian at an optimal solution must be equal to zero. This is only fulfilled if the two terms E1 and E2 each become zero. This is the case if for all cells c out of the set C exactly one frequency f out of potential frequencies F(c) is assigned as BCCH frequency and the other frequencies f of the number $w_c$ of demanded frequencies are assigned as TCH frequencies. The mathematical formulation according to Figure 5 enables all unplanned cells, and advantageously all cells within the network 1, to meet the frequency demand condition as explained above in view of Figure 2.

The mathematical formulation in Figure 6 formulates the frequency distance combiner condition, as also explained above in view of Figure 2. This Hamiltonian sums terms of frequency relations combining Q-bits $x_{cf}^{BCCH}$, $x_{cf}^{TCH}$, distinguishing different combinations of BCCH or TCH frequencies respectively for co-channel (co) or adjacent channel (adj) frequencies. Co-channel frequencies are considered by combinations of Q-bits regarding the same frequency f, whereas adjacent channel frequencies are considered by respective combinations of Q-bits regarding frequencies f and f+1. The mathematical formulation of Figure 6, therefore, considers for all unplanned cells c out of the set C and for all frequencies f out of potential frequencies F(c) the condition, as explained above in view of Figure 2, that each frequency f within a respective cell c must have a distance to other frequencies f ≥ 2.

Considering the formulation of the Hamiltonian of Figure 6, the Hamiltonian at an optimal solution must be zero. This is only fulfilled if the respective frequency relations (combinations of product terms) each attain the value "0". This means that at least one of the respective Q-bits of one product term must attain the value "0". Otherwise, if both Q-bits of a respective product term attain the value "1", the condition of Figure 6 would not be fulfilled and the frequency combiner distance condition could not be met.

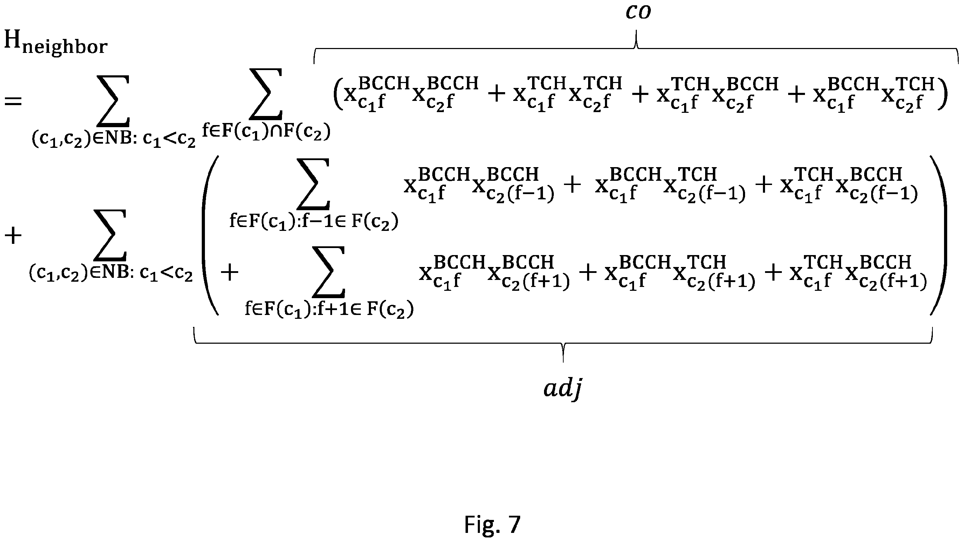

The mathematical formulation of the Hamiltonian according to Figure 7 represents the cell neighbourhood condition as explained above in view of Figure 3a. In Figure 7, all cell pairs $c_1$, $c_2$ are regarded that have a neighbourhood relation NB where at least one of the cells c1, c2 is unplanned. For example, here also the neighbouring cells c1, cN as explained to Figure 3a are comprised.

The Hamiltonian of Figure 7 is formulated as summed terms for all co-channel (co) frequencies f between cell pairs $c_1$, $c_2$ and all adjacent channel (adj) frequencies f, f+1 or f, f-1 between the cell pairs $c_1$, $c_2$ considering respective combinations of Q-bits as regards combinations of BCCH and/or TCH frequencies. Hence, the Hamiltonian according to Figure 7 represents a mathematical formulation of the forbidden frequency relations as explained with regard to Figure 3a. Considering the formulation of the Hamiltonian of Figure 7, the Hamiltonian at an optimal solution must be equal to zero. Here, the same applies as explained with regard to Figure 6. The Hamiltonian of Figure 7 is only equal to zero if all product terms of combinations of respective Q-bits attain the value "0". If frequencies f are assigned in such a way that at least one product term of respective combinations of Q-bits attains the value "1", the condition of Figure 7 would not be fulfilled.

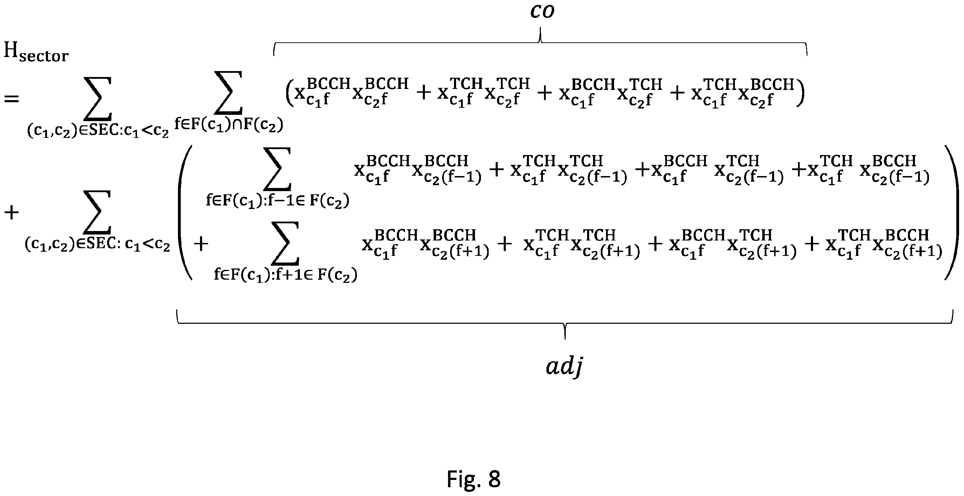

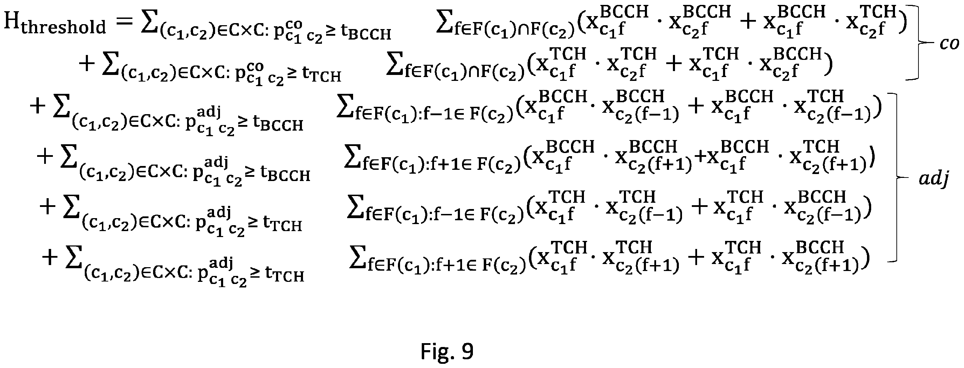

Analogous explanations as to Figure 7 apply to the mathematical formulations of Figures 8 and 9.

Figure 8 represents the cell sector condition as explained above in view of Figure 3b. In Figure 8, all cell pairs $c_1$, $c_2$ are regarded that have a sector relation SEC. The cells $c_1$, $c_2$ in Figure 8 represent all cell pairs that have a sector relation in the network for which at least one of the cells $c_1$, $c_2$ is unplanned. For example, here also the cell pairs c1, c2 and c1, c3 of sector 5 as explained to Figure 3b are comprised. For all respective cell pairs $c_1$, $c_2$ the Hamiltonian of Figure 8 is only equal to zero if all product terms of combinations of respective Q-bits attain the value "0". If frequencies f are assigned in such a way that at least one product term of respective combinations of Q-bits attains the value "1", the condition of Figure 8 would not be fulfilled.

Figure 9 represents the frequency interference probability condition as explained above in view of Figure 4. In Figure 9, all cell pairs $c_1$, $c_2$ are regarded which have a respective condition $p_{c1c2}^{co}, p_{c1c2}^{adj} \geq t_{BCCH}, t_{TCH}$. The cells $c_1$, $c_2$ in Figure 9 represent all cell pairs that have such a probability relation in the network for which at least one of the cells $c_1$, $c_2$ is unplanned. For example, here also the neighbouring cells c1, cN as explained to Figure 4 are comprised. The Hamiltonian of Figure 9 is only equal to zero if all product terms of combinations of respective Q-bits attain the value "0". If frequencies f are assigned in such a way that at least one product term of respective combinations of Q-bits attains the value "1", the condition of Figure 9 would not be fulfilled.

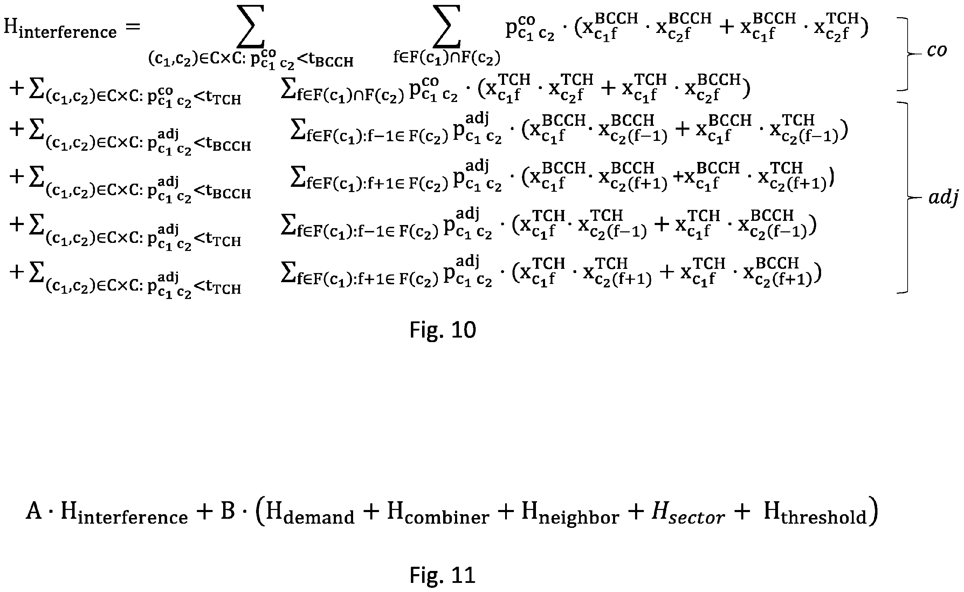

The mathematical formulation of the Hamiltonian according to Figure 10 represents the core optimization problem, taking into account the calculated frequency interference probabilities $p_{c1c2}^{co}, p_{c1c2}^{adj}$, for co-channel (co) frequencies and for adjacent channel (adj) frequencies that are potentially simultaneously assigned between respective cell pairs $c_1$, $c_2$. The cells $c_1$, $c_2$ in Figure 10 represent all cell pairs $c_1$, $c_2$ that have such a probability relation in the network where at least one of the cells $c_1$, $c_2$ is unplanned. Hence, in the core optimization problem of Figure 10, only frequency interference probabilities are considered that have the condition $p_{c1c2}^{co}, p_{c1c2}^{adj} < t_{BCCH}, t_{TCH}$ for respective BCCH and TCH frequencies. The core optimization problem lies in minimizing the Hamiltonian according to Figure 10 in order to find optimized frequency assignments for all cell pairs $c_1$, $c_2$ such that frequency interference between the cells is minimized.

The Hamiltonian according to Figure 10 comprises summed terms, each term multiplying a respective frequency interference probability $p_{c1c2}^{co}, p_{c1c2}^{adj}$ with a frequency relation comprising different combinations of different Q-Bits that are set as explained above. In other words, the Hamiltonian of Figure 10 is formulated as a stress function which penalizes frequency relations between respective cell pairs that lead to frequency interference between the respective cells with the calculated frequency interference probability. If a respective combination of Q-Bits in the respective frequency relations of the terms according to Figure 10 has the value "1", this frequency combination is multiplied with the respective frequency interference probability $p_{c1c2}^{co}, p_{c1c2}^{adj}$ and, therefore, contributes with such probability to frequency interference. Thus, the mathematical formulation of Figure 10 sums all contributions of a respective frequency interference probability $p_{c1c2}^{co}, p_{c1c2}^{adj}$ of all co-channel (co) and adjacent channel (adj) frequencies of all combinations of BCCH and TCH frequencies potentially simultaneously used between respective cell pairs of the unplanned cells.

The Hamiltonian of Figure 10 is generally optimized for all (partially) unplanned cell pairs in a network by a quantum concept processor that runs through different settings of values for the respective Q-bits, thereby calculating the respective result of the Hamiltonian. The target of doing so is to find the minimum of the Hamiltonian for respectively set values of the Q-bits. As soon as a respective minimum of the Hamiltonian of Figure 10 is found, the respective values of the Q-bits leading to this minimum are stored and finally define an optimal frequency assignment with regard to cell interference. Other frequencies that are not candidates for co-channel or adjacent channel frequency interference between cell pairs $c_1$, $c_2$ of Figure 10 (which, therefore have a frequency distance $\geq 2$ to all other cells) can be assigned to the respective cells without any further consideration in the Hamiltonian of Figure 10. Those frequencies are assumed to have a frequency (channel) distance sufficiently high so as not to play a significant role and contribution to interference between cells.

Figure 11 finally shows a global QUBO formulation of the overall optimization problem in which the partial optimization problems according to Figures 5 to 10 are multiplied with respective weighting factors A and B and summed to the global optimization problem. This global optimization problem is finally processed by applying a computer-implemented algorithm within the quantum concept processor. In this regard, a minimization of the Hamiltonian according to Figure 10 takes place, thereby considering further optimization constraints as formulated in the Hamiltonians according to Figures 5 to 9.

According to Figure 11, the core optimization problem of Figure 10 is multiplied with the weighting factor A, whereas a sum of the other optimization constraints according to Figures 5 to 9 is multiplied with the weighting factor B. With the aid of these weighting factors, A and B, different weights and focus on different partial optimization problems can be set. If, for example, the factor B is greater than the factor A, the focus is more on the fulfilment of the optimization constraints as explained with regard to Figures 5 to 9. The more the factor A is increased towards factor B, the more weight is on the optimization of interference according to the optimization problem formulated in Figure 10, explained above.

In certain implementations, certain constraints are allowed to be violated. For example, the constraint of Figure 5 (frequency demand condition) may be violated for certain cells. However, also in these scenarios, the result of the algorithmic calculation of the method as explained above can be invalid if there is one cell that is not assigned at least one BCCH frequency. In such a case, the constraint of Figure 5 can be split into different constraints following the terms E1 and E2 of Figure 5 separately. In this case, the term E1 must be fulfilled for all cells to be planned, whereas the term E2 may be violated for certain cells. For example, the term E1 can be weighted with a factor B and the term E2 can be weighted with a factor C, wherein $A < C < B$ is defined. In this way, the term E2 defines a soft constraint, whereas the term E1 defines a harder constraint. In such a way, certain constraints can be flexibly modelled to real scenarios and use cases of network planning.

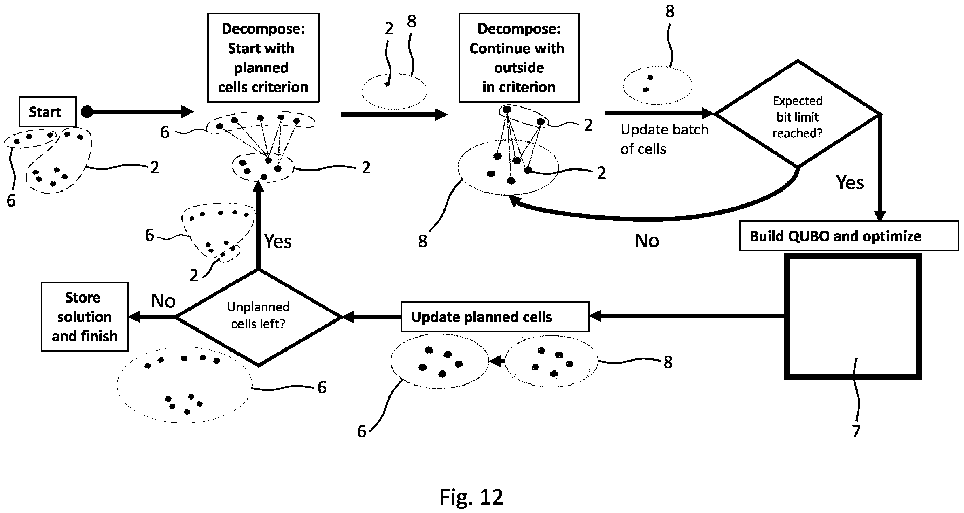

Figure 12 shows an exemplary schematic illustration of an algorithm performing the approach as explained above. Figure 12 shows the processing of the above-explained method steps and procedure considering the frequency assignment to unplanned cells 2, wherein these unplanned cells 2 are processed in a decomposed manner. This has the advantage of, or is even necessary for, processing the explained method despite limited hardware performance of the quantum concept processor 7 for solving the optimization problem as explained above with regard to Figures 5 to 11. This optimization problem (see in particular Figure 11) is very complex and has to be decomposed into several partial solutions that can be iteratively processed to find an optimal solution. In each iteration one partial solution is found by the quantum concept processor 7.

The process is started with certain planned cells 6 and unplanned cells 2. If there are no planned cells 6, the process is started with one randomly chosen unplanned cell 2. However, if there is one or more already planned cells 6, to decompose the optimization problem, the process is started with a so-called planned cell criterion. This means that in a first step candidates of unplanned cells 2 are sorted/prioritized according to certain constraints or cell relations with regard to already planned cells 6. For example, first those unplanned cells 2 which have the most cell relations to already planned cells 6 are considered whose frequency assignment procedure is influenced the most by constraints of already planned cells 6 in terms of potential frequency interference. These unplanned cells 2 are then included first in a sub-set 8 of unplanned cells 2.

In a second step, the process is continued with a so-called outside in criterion. For this purpose further candidates of unplanned cells 2 which are not already included in the sub-set 8 of unplanned cells 2 are selected according to certain constraints or cell relations with regard to the cells already included in the sub-set 8 of unplanned cells 2. These unplanned cells 2 are then also included in the sub-set 8. This second step is repeated until an upper limit of the frequency variables (Q-bits) is reached that can be calculated at a time by the quantum concept processor 7. The built sub-set 8 is then input to an algorithmic procedure within the quantum concept processor 7. For example, the quantum concept processor 7 according to Figure 12 is configured to solve the optimization problem by means of quantum annealing emulation. The quantum concept processor 7 applies the mathematical formulation of the overall optimization problem according to Figure 11. The quantum concept processor 7 then calculates for the sub-set 8 an optimized solution of the global optimization problem according to Figure 11.

After the algorithmic procedure is completed, the finally calculated minimum of the global optimization problem according to Figure 11 is then output from the quantum concept processor 7 for the respective sub-set 8. The cells within sub-set 8 are updated to planned cells 6 with their determined optimized assignment of frequencies. In the case that there are any unplanned cells 2 left, the procedure is iteratively performed for the remaining set of unplanned cells 2 until all cells are planned and processed. In this case, the global solution for all cells within the communications network is stored. The algorithm is then finished.

Hence, by applying a computer-implemented algorithmic procedure according to Figure 12, which bases on the implementations and explanations above with regard to Figures 1 to 11, an optimized frequency assignment can be provided for all cells c within a communications network 1. The process is a hybrid method between pre-processing steps (formation of the respective sub-sets 8) and solution steps by using a quantum concept processor 7. The procedure according to Figure 12 considers highly conflicting unplanned cells 2 early in the process to allow for a maximal degree of freedom in the optimization. This further improves the solution quality compared to state of the art approaches.

The formulation of the optimization problem as a QUBO representation has elegant properties regarding the here applied quantum concept computing within processor 7. Nowadays, quantum concept computing still reaches significant limits. However, with computer science developing more and more towards quantum computing, the herein described approach can be further enhanced and developed in future. For example, when quantum computing is more and more applicable for increasing sizes of underlying optimization problems, the decomposition strategy as explained in view of Figure 12 can be more and more reduced, which means that the optimization problem can be more and more processed and computed as a whole without decomposition steps and iterations of the problem. Moreover, with quantum computing being more and more applicable, a more and more increasing number of Q-bits, increasingly complex optimization problems and/or more and more non-linear constraints can be taken into consideration by the approach explained herein.

The here explained approach is primarily applicable to the assignment of demanded numbers of frequencies to cells within a mobile communications network. The solution can also be used, however, for assignment problems like the planning of line separated mobile phone networks, planning of code separated mobile phone networks or an optimal assignment during operation time, e.g. to react on workload spikes.

The embodiments illustrated and explained herein are merely exemplary.

List of reference signs

| | |
|---|---|
| 1 | communications network |
| 2 | unplanned cells |
| 3 | participants |
| 4 | neighbourhood |
| 5 | sector |
| 6 | planned cells |
| 7 | quantum concept processor |
| 8 | subset of unplanned cells |

| | |
|---|---|
| a1 to aN | antennae |
| C | set of all Cells |
| c, c1 to cN | single cells |
| co | co-channel |
| adj | adjacent channel |
| BCCH | broadcast channel frequency |
| TCH | traffic channel frequency |
| NB | neighbourhood relation |
| SEC | sector |
| E1, E2 | terms of frequency demand condition |
| f | frequency |
| p | frequency interference probability |
| t | threshold |
| w | number of demanded frequencies |
| x | frequency variable |

**Claims**

1. Computer-implemented method for optimizing an assignment of frequencies, f, to cells, C, of a mobile communications network (1), the cells, C, being distributed for communication within the mobile communications network (1), wherein the method comprises the following steps:

   - Specifying a set of unplanned cells (2) in the mobile communications network (1), wherein an unplanned cell is a mobile network cell defined by the coverage area of an antenna, to which one or more frequencies is to be assigned to,

- Specifying for each unplanned cell (2) a set of frequencies, f, to be potentially assigned to this unplanned cell (2), **characterised by**:

- Specifying frequency variables, $x_{cf}$, wherein each frequency variable, $x_{cf}$, is associated with one cell, C, within the mobile communications network (1) and one frequency, f, for this cell, c,
- Calculating frequency interference probabilities, p, of selected cell pairs, wherein each cell pair defines a relation of an unplanned cell (2) to another cell, c, within the mobile communications network (1), wherein the interference probability is defined as a real valued function of frequency assignment x frequency assignment assigning to each cell pair of frequency assigned cells a probability for disturbance,
- Formulating terms of a stress function, each term connecting a calculated frequency interference probability, p, of a respective cell pair with a frequency relation between the cells (2, c) of the respective cell pair, wherein the frequency relations in the terms of the stress function are formulated as combinations of selected frequency variables, $x_{cf}$ and the stress function is formulated as a quadratic unconstrained binary polynomial,
- Determining, by using a quantum concept processor (7), an optimized assignment of frequencies (f) by selecting for each unplanned cell (2) a sub-set of frequencies, f, from the respective set of frequencies, such that the stress function is minimized, by calculating the terms of the stress function, by using the quantum concept processor (7), to set the frequency variables, $x_{cf}$ such that the stress function is minimized.

2. The method according to claim 1, wherein in the terms of the stress function only calculated frequency interference probabilities, p, are considered that are below a predetermined threshold t.

3. The method according to claims 1 or 2, wherein the method is performed under consideration of a frequency demand condition that each sub-set of frequencies, f, assigned to an unplanned cell (2) has a specified number, $w_c$, of frequencies, f, wherein one frequency, f, is defined as control channel frequency, BCCH, and the other frequencies, f, are defined as traffic channel frequencies, TCH.

4. The method according to any one of claims 1 to 3, wherein the method is performed under consideration of a frequency combiner distance condition that for each unplanned cell (2) forbidden frequency relations are defined such that the frequencies, f, of the sub-set of frequencies, f, assigned to this cell (2) have frequency relations with a certain channel distance.

5. The method according to any one of claims 1 to 4, wherein the method is performed under consideration of a cell neighbourhood condition that for those cells, c, which have a determined neighbourhood relation (4) forbidden frequency relations between these cells, c, are defined.

6. The method according to any one of claims 1 to 5, wherein the method is performed under consideration of a frequency interference probability condition that forbidden frequency relations between the cells (2, c) of those cell pairs are defined whose frequency interference probabilities, p, are above a predetermined threshold, t.

7. The method according to any one of claims 1 to 6, wherein the frequency relations distinguish between co-channel frequency relations and adjacent channel frequency relations, the co-channel frequency relations being formulated for frequencies, f, of a same channel, co, and the adjacent channel frequency relations being formulated for frequencies, f, of adjacent channels, adj.

8. The method according to any one of claims 1 to 7, wherein the frequency relations distinguish between control channel frequencies, BCCH, and traffic channel frequencies, TCH.

9. The method according to any one of claims 4 to 8, further comprising the following steps:

- Specifying frequency variables, $x_{cf}$, wherein each frequency variable, $x_{cf}$, is associated with one cell, c, within the mobile communications network (1) and one frequency, f, for this cell, c,
- Formulating the frequency relations of the respective condition as terms of selected frequency variables, $x_{cf}$,
- Calculating the frequency relations of the respective condition, by using the quantum concept processor (7), to set the frequency variables, $x_{cf}$, such that the respective frequency relations become zero.

10. The method according to any one of claims 1 to 9, wherein the calculated frequency interference probabilities, p, of respective cell pairs distinguish between co-channel frequency interference probabilities, $p_{co}$, and adjacent channel frequency interference probabilities, $p_{adj}$, the co-channel frequency interference probabilities, $p_{co}$, being calculated for frequencies, f, of a same channel, co, between the cells (2, c) of respective cell pairs and the adjacent channel frequency interference probabilities, Padj' being calculated for frequencies, f, of adjacent channels, adj, between the cells (2, c) of respective cell pairs.

11. The method according to any one of claims 1 to 10, further comprising the following steps:

- Specifying a subset (8) of unplanned cells (2) from the set of unplanned cells (2),
- Performing the method for the subset (8) of unplanned cells (2),
- Updating the cells in the subset to planned cells (6) with their determined optimized assignment of frequencies, f, and
- Iteratively performing the method for the remaining unplanned cells (2) of the set of unplanned cells (2) until all unplanned cells (2) of the set of unplanned cells (2) are processed.

12. A quantum concept processor (7), in particular a digital annealing processing unit or a quantum annealing processing unit, configured for performing the optimisation steps of a method according to any one of claims 1 to 11.

13. A computer program, the computer program comprising instructions that, when the program is executed by one or more processors, cause each of the one or more processors to perform a method according to any one of claims 1 to 11.

14. An interface arrangement comprising one or more interfaces to cells, C, of a mobile communications network (1), the cells, C, being distributed for communication within the mobile communications network (1), wherein the interface arrangement is configured to automatically deploy an optimized assignment of frequencies, f, determined by a method according to any one of claims 1 to 11 to the cells, C, of the mobile communications network.

**Patentansprüche**

1. Computerimplementiertes Verfahren zur Optimierung einer Zuordnung von Frequenzen, f, zu Zellen, C, eines mobilen Kommunikationsnetzes (1), wobei die Zellen, C, zur Kommunikation innerhalb des mobilen Kommunikationsnetzes (1) verteilt sind, das Verfahren umfassend die folgenden Schritte:

- Spezifizierung einer Menge ungeplanter Zellen (2) im mobilen Kommunikationsnetz (1), wobei eine ungeplante Zelle eine durch den Versorgungsbereich einer Antenne definierte Mobilnetzzelle ist, der eine oder mehrere Frequenzen zugewiesen werden sollen,
- Spezifizierung für jede ungeplante Zelle (2) einer Menge von Frequenzen, f, die dieser ungeplanten Zelle (2) potentiell zuzuordnen sind, **gekennzeichnet durch**:
- Spezifizierung von Frequenzvariablen, $x_{cf}$, wobei jede Frequenzvariable, $x_{cf}$, einer Zelle, c, innerhalb des mobilen Kommunikationsnetzes (1) und einer Frequenz, f, für diese Zelle, c, zugeordnet ist,
- Berechnung von Frequenzinterferenzwahrscheinlichkeiten, p, ausgewählter Zellenpaare, wobei jedes Zellenpaar eine Relation einer ungeplanten Zelle (2) zu einer anderen Zelle, c, innerhalb des mobilen Kommunikationsnetzes (1) definiert, wobei die Interferenzwahrscheinlichkeit als reellwertige Funktion von Frequenzzuordnung x Frequenzzuordnung definiert ist, die jedem Zellenpaar von frequenzzugeordneten Zellen eine Störungswahrscheinlichkeit zuordnet,
- Formulierung von Termen einer Stressfunktion, wobei jeder Term eine berechnete Frequenzinterferenzwahrscheinlichkeit, p, eines jeweiligen Zellenpaares mit einer Frequenzrelation zwischen den Zellen (2, c) des jeweiligen Zellenpaares verbindet, wobei die Frequenzrelationen in den Termen der Stressfunktion als Kombinationen ausgewählter Frequenzvariablen, $x_{cf}$, formuliert sind und die Stressfunktion als quadratisches, unbeschränktes binäres Polynom formuliert ist,
- Ermitteln einer optimierten Zuordnung von Frequenzen (f) unter Verwendung eines Quantenkonzeptprozessors (7), indem für jede ungeplante Zelle (2) eine Teilmenge von Frequenzen, f, aus der jeweiligen Menge von Frequenzen so ausgewählt wird, dass die Stressfunktion minimiert wird, indem die Terme der Stressfunktion unter Verwendung des Quantenkonzeptprozessors (7) berechnet werden, um die Frequenzvariablen, $x_{cf}$, so einzustellen, dass die Stressfunktion minimiert wird.

2. Verfahren nach Anspruch 1, wobei in den Termen der Stressfunktion nur berechnete Frequenzinterferenzwahrscheinlichkeiten, p, berücksichtigt werden, die unter einem vorgegebenen Schwellenwert t liegen.

3. Verfahren nach Anspruch 1 oder 2, wobei das Verfahren unter Berücksichtigung einer Frequenzbedarfsbedingung durchgeführt wird, dass jede Teilmenge von Frequenzen, f, die einer ungeplanten Zelle (2) zugeordnet ist, eine bestimmte Anzahl, $w_c$, von Frequenzen, f, aufweist, wobei eine Frequenz, f, als Kontrollkanalfrequenz, BCCH, und die anderen Frequenzen, f, als Verkehrskanalfrequenzen, TCH, definiert sind.

4. Verfahren nach einem der Ansprüche 1 bis 3, wobei das Verfahren unter Berücksichtigung einer Frequenzkombinator-Abstandsbedingung durchgeführt wird, wobei für jede ungeplante Zelle (2) verbotene Frequenzrelationen so definiert sind, dass die Frequenzen, f, der dieser Zelle (2) zugeordneten Teilmenge von Frequenzen, f, Frequenzrelationen mit einem bestimmten Kanalabstand aufweisen.

5. Verfahren nach einem der Ansprüche 1 bis 4, wobei das Verfahren unter Berücksichtigung einer Zellnachbarschaftsbedingung durchgeführt wird, wobei für diejenigen Zellen, c, die eine bestimmte Nachbarschaftsrelation (4) aufweisen, verbotene Frequenzrelationen zwischen diesen Zellen, c, definiert sind.

6. Verfahren nach einem der Ansprüche 1 bis 5, wobei das Verfahren unter Berücksichtigung einer Frequenzinterferenzwahrscheinlichkeitsbedingung durchgeführt wird, wobei verbotene Frequenzrelationen zwischen den Zellen (2, c) derjenigen Zellenpaare definiert sind, deren Frequenzinterferenzwahrscheinlichkeiten, p, über einem vorbestimmten Schwellenwert, t, liegen.

7. Verfahren nach einem der Ansprüche 1 bis 6, wobei die Frequenzrelationen zwischen Gleichkanal-Frequenzrelationen und Nachbarkanal-Frequenzrelationen unterscheiden,
wobei die Gleichkanal-Frequenzrelationen für Frequenzen, f, eines gleichen Kanals, co, und die Nachbarkanal-Frequenzrelationen für Frequenzen, f, von benachbarten Kanälen, adj, formuliert werden.

8. Verfahren nach einem der Ansprüche 1 bis 7, wobei die Frequenzrelationen zwischen Kontrollkanalfrequenzen, BCCH, und Verkehrskanalfrequenzen, TCH, unterscheiden.

9. Verfahren nach einem der Ansprüche 4 bis 8, das außerdem die folgenden Schritte umfasst:

   - Spezifizierung von Frequenzvariablen, $x_{cf}$, wobei jede Frequenzvariable, $x_{cf}$, einer Zelle, c, innerhalb des mobilen Kommunikationsnetzes (1) und einer Frequenz, f, für diese Zelle, c, zugeordnet ist,
   - Formulierung der Frequenzrelationen der jeweiligen Bedingung als Terme ausgewählter Frequenzvariablen, $x_{cf}$,
   - Berechnung der Frequenzrelationen der jeweiligen Bedingung mit Hilfe des Quantenkonzeptprozessors (7), um die Frequenzvariablen, $x_{cf}$, so einzustellen, dass die jeweiligen Frequenzrelationen Null werden.

10. Verfahren nach einem der Ansprüche 1 bis 9, wobei die berechneten Frequenzinterferenzwahrscheinlichkeiten, p, der jeweiligen Zellenpaare zwischen Gleichkanal-Frequenzinterferenzwahrscheinlichkeiten, $p_{co}$, und Nachbarkanal-Frequenzinterferenzwahrscheinlichkeiten, $p_{adj}$, unterscheiden, wobei die Gleichkanal-Frequenzinterferenzwahrscheinlichkeiten, $p_{co}$, für Frequenzen, f, eines gleichen Kanals, co, zwischen den Zellen (2, c) jeweiliger Zellenpaare berechnet werden und die Nachbarkanal-Frequenzinterferenzwahrscheinlichkeiten, $p_{adj}$, für Frequenzen, f, benachbarter Kanäle, adj, zwischen den Zellen (2, c) jeweiliger Zellenpaare berechnet werden.

11. Verfahren nach einem der Ansprüche 1 bis 10, umfassend ferner die folgenden Schritte:

   - Spezifizierung einer Teilmenge (8) ungeplanter Zellen (2) aus der Menge ungeplanter Zellen (2),
   - Ausführen des Verfahrens für die Teilmenge (8) der ungeplanten Zellen (2),
   - Aktualisierung der Zellen in der Teilmenge zu geplanten Zellen (6) mit ihrer ermittelten optimierten Zuordnung von Frequenzen, f, und
   - Iterative Durchführung des Verfahrens für die verbleibenden ungeplanten Zellen (2) der Menge ungeplanter Zellen (2), bis alle ungeplanten Zellen (2) der Menge ungeplanter Zellen (2) verarbeitet sind.

12. Quantenkonzeptprozessor (7), insbesondere eine Digitalannealing-Prozessoreinheit oder eine Quantenannealing-Prozessoreinheit, konfiguriert zur Durchführung der Optimierungsschritte eines Verfahrens nach einem der Ansprüche 1 bis 11.

13. Computerprogramm, wobei das Computerprogramm Anweisungen umfasst, die, wenn das Programm von einem oder mehreren Prozessoren ausgeführt wird, jeden des einen oder der mehreren Prozessoren veranlassen, ein Verfahren nach einem der Ansprüche 1 bis 11 durchzuführen.

14. Schnittstellenanordnung mit einer oder mehreren Schnittstellen zu Zellen, C, eines mobilen Kommunikationsnetzes (1), wobei die Zellen, C, zur Kommunikation innerhalb des mobilen Kommunikationsnetzes (1) verteilt sind, wobei die Schnittstellenanordnung so konfiguriert ist, dass sie automatisch eine optimierte Zuordnung von Frequenzen, f, die durch ein Verfahren nach einem der Ansprüche 1 bis 11 ermittelt wurde, zu den Zellen, C, des mobilen Kommunikationsnetzes anwendet.

**Revendications**

1. Procédé mise en œuvre par ordinateur pour optimiser l'attribution de fréquences, f, à des cellules, C, d'un réseau de communications mobiles (1), les cellules, C, étant distribuées pour la communication au sein du réseau de communications mobiles (1), dans lequelle le procédé comprend les étapes suivantes :

   - Spécification d'un ensemble de cellules non planifiées (2) dans le réseau de communications mobiles (1), une cellule non planifiée étant une cellule de réseau mobile définie par la zone de couverture d'une antenne, à laquelle une ou plusieurs fréquences doivent être attribuées,
   - Spécifier pour chaque cellule non planifiée (2) un ensemble de fréquences, f, à attribuer potentiellement à cette cellule non planifiée (2), **caractérisé par** :
   - Spécification des variables de fréquence, $x_{cf}$, dans laquelle chaque variable de fréquence, $x_{cf}$, est associée à une cellule, c, dans le réseau de communications mobiles (1) et à une fréquence, f, pour cette cellule, c,
   - Calcul des probabilités d'interférence de fréquence, p, de paires de cellules sélectionnées, dans lequel chaque paire de cellules définit une relation entre une cellule non planifiée (2) et une autre cellule, c, dans le réseau de communications mobiles (1), dans lequel la probabilité d'interférence est définie comme une fonction à valeur réelle de l'assignation de fréquence x assignation de fréquence attribuant à chaque paire de cellules de fréquences assignées une probabilité de perturbation,
   - Formulation des termes d'une fonction de stress, chaque terme reliant une probabilité d'interférence de fréquence calculée, p, d'une paire de cellules respective à une relation de fréquence entre les cellules (2, c) de la paire de cellules respective, dans laquelle les relations de fréquence dans les termes de la fonction de stress sont formulées comme des combinaisons de variables de fréquence sélectionnées, $x_{cf}$, et la fonction de stress est formulée comme un polynôme binaire quadratique sans contrainte,
   - Déterminer, en utilisant un processeur de concepts quantiques (7), une affectation optimisée de fréquences, f, en sélectionnant pour chaque cellule non planifiée (2) un sous-ensemble de fréquences, f, de l'ensemble respectif de fréquences, de telle sorte que la fonction de stress soit minimisée, en calculant les termes de la fonction de stress, en utilisant le processeur de concepts quantiques (7), pour définir les variables de fréquence, $x_{cf}$, de telle sorte que la fonction de stress soit minimisée .

2. Procédé selon la revendication 1, dans lequelle, dans les termes de la fonction de stress, seules les probabilités d'interférence de fréquence calculées, p, qui sont inférieures à un seuil prédéterminé, t, sont prises en compte.

3. Procédé selon les revendications 1 ou 2, dans lequelle le procédé est exécutée en tenant compte d'une condition de demande de fréquence selon laquelle chaque sous-ensemble de fréquences, f, assigné à une cellule non planifiée (2) a un nombre spécifié, $w_c$, de fréquences, f, dans lequel une fréquence, f, est définie comme la fréquence du canal de contrôle, BCCH, et les autres fréquences, f, sont définies comme les fréquences du canal de trafic, TCH.

4. Procédé selon l'une des revendications 1 à 3, dans lequelle le procédé est exécutée en tenant compte d'une condition de distance du combineur de fréquences selon laquelle, pour chaque cellule non planifiée (2), des relations de fréquence interdites sont définies de sorte que les fréquences, f, du sous-ensemble de fréquences, f, assignées à cette cellule (2) ont des relations de fréquence avec une certaine distance entre les canaux.

5. Procédé selon l'une des revendications 1 à 4, dans lequelle le procédé est exécutée en tenant compte d'une condition de voisinage des cellules selon laquelle pour les cellules, c, qui ont une relation de voisinage déterminée (4), des relations de fréquence interdites entre ces cellules, c, sont définies.

6. Procédé selon l'une des revendications 1 à 5, dans lequelle le procédé est exécutée en tenant compte d'une condition de probabilité d'interférence de fréquence selon laquelle des relations de fréquence interdites entre les cellules (2, c) de ces paires de cellules sont définies dont les probabilités d'interférence de fréquence, p, sont supérieures à un seuil prédéterminé, t.

7. Procédé selon l'une des revendications 1 à 6, dans lequelle les relations de fréquence font la distinction entre les relations de fréquence dans le même canal et les relations de fréquence dans le canal adjacent, les relations de fréquence entre canaux étant formulées pour les fréquences, f, d'un même canal, co, et les relations de fréquence entre canaux adjacents étant formulées pour les fréquences, f, de canaux adjacents, adj.

8. Procédé selon l'une des revendications 1 à 7, dans lequelle les relations de fréquence distinguent les fréquences du canal de contrôle, BCCH, et les fréquences du canal de trafic, TCH.

9. Procédé selon l'une des revendications 4 à 8, comprenant en outre les étapes suivantes :

   - Spécification des variables de fréquence, $x_{cf}$, chaque variable de fréquence, $x_{cf}$, étant associée à une cellule, c, dans le réseau de communications mobiles (1) et à une fréquence, f, pour cette cellule, c,
   - En formulant les relations de fréquence de la condition respective en termes de variables de fréquence sélectionnées, $x_{cf}$,
   - Calculer les relations de fréquence de la condition respective, en utilisant le processeur de concept quantique (7), pour définir les variables de fréquence, $x_{cf}$, de manière à ce que les relations de fréquence respectives deviennent nulles.

10. Procédé selon l'une des revendications 1 à 9, dans lequelle les probabilités d'interférence de fréquence calculées, p, des paires de cellules respectives distinguent les probabilités d'interférence de fréquence dans le même canal, $p_{co}$, et les probabilités d'interférence de fréquence dans le canal adjacent, $p_{adj}$ , les probabilités d'interférence de fréquence dans le même canal, $p_{co}$, sont calculées pour les fréquences f d'un même canal, co, entre les cellules (2, c) de paires de cellules respectives et les probabilités d'interférence de fréquence dans le canal adjacent, $p_{adj}$ , sont calculées pour les fréquences f de canaux adjacents, adj, entre les cellules (2, c) de paires de cellules respectives.

11. Procédé selon l'une des revendications 1 à 10, comprenant en outre les étapes suivantes :

   - Spécification d'un sous-ensemble (8) de cellules non planifiées (2) à partir de l'ensemble de cellules non planifiées (2),
   - Exécution du procédé pour le sous-ensemble (8) de cellules non planifiées (2),
   - Mise à jour des cellules du sous-ensemble en cellules planifiées (6) avec leur assignation optimisée de fréquences, f, et
   - Exécution itérative du procédé pour les cellules non planifiées restantes (2) de l'ensemble de cellules non planifiées (2) jusqu'à ce que toutes les cellules non planifiées (2) de l'ensemble de cellules non planifiées (2) soient traitées.

12. Processeur de concept quantique (7), en particulier unité de traitement de recuit numérique ou unité de traitement de recuit quantique, configuré pour exécuter les étapes d'optimisation d'un procédé selon l'une quelconque des revendications 1 à 11.

13. Programme d'ordinateur comprenant des instructions qui, lorsque le programme est exécuté par un ou plusieurs processeurs, amènent chacun des un ou plusieurs processeurs à exécuter un procédé selon l'une des revendications 1 à 11.

14. Dispositif d'interface comprenant une ou plusieurs interfaces avec des cellules C d'un réseau de communications mobiles (1), les cellules C étant réparties pour la communication au sein du réseau de communications mobiles (1), dans lequel le dispositif d'interface est configuré pour déployer automatiquement une assignation optimisée de fréquences f, déterminée par un procédé selon l'une des revendications 1 à 11, aux cellules C du réseau de communications mobiles.

Fig. 1

Fig. 2

Fig. 3a

Fig. 3b

cN

c1

BCCH

BCCH

TCH

TCH

$$p^{co}_{c_1 c_N}, p^{adj}_{c_1 c_N} \geq t_{BCCH}, t_{TCH}$$

Fig. 4

$$H_{demand} = \sum_{c \in C: w_c > 0} \underbrace{\left( \sum_{f \in F(c)} x_{cf}^{BCCH} - 1 \right)^2}_{E1} + \underbrace{\left( \sum_{f \in F(c)} x_{cf}^{TCH} - (w_c - 1) \right)^2}_{E2}$$

**Fig. 5**

$$H_{combiner} = \sum_{c \in C} \left( \underbrace{\sum_{f \in F(c)} x_{cf}^{BCCH} x_{cf}^{TCH}}_{co} + \underbrace{\sum_{f \in F(c): f+1 \in F(c)} \left( x_{cf}^{TCH} x_{c(f+1)}^{TCH} + x_{cf}^{BCCH} x_{c(f+1)}^{TCH} + x_{c(f+1)}^{BCCH} x_{cf}^{TCH} \right)}_{adj} \right)$$

**Fig. 6**

$$H_{neighbor}$$

$$= \sum_{(c_1,c_2)\in NB:\, c_1<c_2} \sum_{f\in F(c_1)\cap F(c_2)} \overbrace{\left(x_{c_1 f}^{BCCH}x_{c_2 f}^{BCCH} + x_{c_1 f}^{TCH}x_{c_2 f}^{TCH} + x_{c_1 f}^{TCH}x_{c_2 f}^{BCCH} + x_{c_1 f}^{BCCH}x_{c_2 f}^{TCH}\right)}^{co}$$

$$+ \sum_{(c_1,c_2)\in NB:\, c_1<c_2} \underbrace{\left( \sum_{f\in F(c_1):\, f-1\in F(c_2)} x_{c_1 f}^{BCCH}x_{c_2(f-1)}^{BCCH} + x_{c_1 f}^{BCCH}x_{c_2(f-1)}^{TCH} + x_{c_1 f}^{TCH}x_{c_2(f-1)}^{BCCH} \right. }_{adj}$$
$$\left. + \sum_{f\in F(c_1):\, f+1\in F(c_2)} x_{c_1 f}^{BCCH}x_{c_2(f+1)}^{BCCH} + x_{c_1 f}^{BCCH}x_{c_2(f+1)}^{TCH} + x_{c_1 f}^{TCH}x_{c_2(f+1)}^{BCCH} \right)$$

Fig. 7

EP 4 262 305 B1

$$
\begin{aligned}
\mathrm{H_{sector}} \\
&= \sum_{(c_1,c_2)\in SEC:c_1<c_2} \sum_{f\in F(c_1)\cap F(c_2)} \overbrace{\left( x_{c_1f}^{BCCH} x_{c_2f}^{BCCH} + x_{c_1f}^{TCH} x_{c_2f}^{TCH} + x_{c_1f}^{BCCH} x_{c_2f}^{TCH} + x_{c_1f}^{TCH} x_{c_2f}^{BCCH} \right)}^{co} \\
&+ \sum_{(c_1,c_2)\in SEC:\, c_1<c_2} \underbrace{\left(
\begin{array}{l}
\displaystyle\sum_{f\in F(c_1):f-1\in F(c_2)} x_{c_1f}^{BCCH} x_{c_2(f-1)}^{BCCH} + x_{c_1f}^{TCH} x_{c_2(f-1)}^{TCH} + x_{c_1f}^{BCCH} x_{c_2(f-1)}^{TCH} + x_{c_1f}^{TCH} x_{c_2(f-1)}^{BCCH} \\[2ex]
+ \displaystyle\sum_{f\in F(c_1):f+1\in F(c_2)} x_{c_1f}^{BCCH} x_{c_2(f+1)}^{BCCH} + x_{c_1f}^{TCH} x_{c_2(f+1)}^{TCH} + x_{c_1f}^{BCCH} x_{c_2(f+1)}^{TCH} + x_{c_1f}^{TCH} x_{c_2(f+1)}^{BCCH}
\end{array}
\right)}_{adj}
\end{aligned}
$$

Fig. 8

$$\begin{aligned}
H_{threshold} = &\sum_{(c_1,c_2)\in C\times C:\ p^{co}_{c_1 c_2}\geq t_{BCCH}} \sum_{f\in F(c_1)\cap F(c_2)} \left(x^{BCCH}_{c_1 f}\cdot x^{BCCH}_{c_2 f} + x^{BCCH}_{c_1 f}\cdot x^{TCH}_{c_2 f}\right) \Big\} \\
&+\sum_{(c_1,c_2)\in C\times C:\ p^{co}_{c_1 c_2}\geq t_{TCH}} \sum_{f\in F(c_1)\cap F(c_2)} \left(x^{TCH}_{c_1 f}\cdot x^{TCH}_{c_2 f} + x^{TCH}_{c_1 f}\cdot x^{BCCH}_{c_2 f}\right) \ co \\[4pt]
&+\sum_{(c_1,c_2)\in C\times C:\ p^{adj}_{c_1 c_2}\geq t_{BCCH}} \sum_{f\in F(c_1):f-1\in F(c_2)} \left(x^{BCCH}_{c_1 f}\cdot x^{BCCH}_{c_2 (f-1)} + x^{BCCH}_{c_1 f}\cdot x^{TCH}_{c_2 (f-1)}\right) \Big\} \\
&+\sum_{(c_1,c_2)\in C\times C:\ p^{adj}_{c_1 c_2}\geq t_{BCCH}} \sum_{f\in F(c_1):f+1\in F(c_2)} \left(x^{BCCH}_{c_1 f}\cdot x^{BCCH}_{c_2 (f+1)} + x^{BCCH}_{c_1 f}\cdot x^{TCH}_{c_2 (f+1)}\right) \\
&+\sum_{(c_1,c_2)\in C\times C:\ p^{adj}_{c_1 c_2}\geq t_{TCH}} \sum_{f\in F(c_1):f-1\in F(c_2)} \left(x^{TCH}_{c_1 f}\cdot x^{TCH}_{c_2 (f-1)} + x^{TCH}_{c_1 f}\cdot x^{BCCH}_{c_2 (f-1)}\right) \ adj \\
&+\sum_{(c_1,c_2)\in C\times C:\ p^{adj}_{c_1 c_2}\geq t_{TCH}} \sum_{f\in F(c_1):f+1\in F(c_2)} \left(x^{TCH}_{c_1 f}\cdot x^{TCH}_{c_2 (f+1)} + x^{TCH}_{c_1 f}\cdot x^{BCCH}_{c_2 (f+1)}\right)
\end{aligned}$$

Fig. 9

$$H_{interference} = \sum_{(c_1,c_2)\in C\times C:\, p^{co}_{c_1 c_2} < t_{BCCH}} \sum_{f\in F(c_1)\cap F(c_2)} p^{co}_{c_1 c_2} \cdot (x^{BCCH}_{c_1 f} \cdot x^{BCCH}_{c_2 f} + x^{BCCH}_{c_1 f} \cdot x^{TCH}_{c_2 f}) \;\Big] co$$

$$+ \sum_{(c_1,c_2)\in C\times C:\, p^{co}_{c_1 c_2} < t_{TCH}} \sum_{f\in F(c_1)\cap F(c_2)} p^{co}_{c_1 c_2} \cdot (x^{TCH}_{c_1 f} \cdot x^{TCH}_{c_2 f} + x^{TCH}_{c_1 f} \cdot x^{BCCH}_{c_2 f})$$

$$+ \sum_{(c_1,c_2)\in C\times C:\, p^{adj}_{c_1 c_2} < t_{BCCH}} \sum_{f\in F(c_1):\, f-1\in F(c_2)} p^{adj}_{c_1 c_2} \cdot (x^{BCCH}_{c_1 f} \cdot x^{BCCH}_{c_2 (f-1)} + x^{BCCH}_{c_1 f} \cdot x^{TCH}_{c_2 (f-1)})$$

$$+ \sum_{(c_1,c_2)\in C\times C:\, p^{adj}_{c_1 c_2} < t_{BCCH}} \sum_{f\in F(c_1):\, f+1\in F(c_2)} p^{adj}_{c_1 c_2} \cdot (x^{BCCH}_{c_1 f} \cdot x^{BCCH}_{c_2 (f+1)} + x^{BCCH}_{c_1 f} \cdot x^{TCH}_{c_2 (f+1)})$$

$$+ \sum_{(c_1,c_2)\in C\times C:\, p^{adj}_{c_1 c_2} < t_{TCH}} \sum_{f\in F(c_1):\, f-1\in F(c_2)} p^{adj}_{c_1 c_2} \cdot (x^{TCH}_{c_1 f} \cdot x^{TCH}_{c_2 (f-1)} + x^{TCH}_{c_1 f} \cdot x^{BCCH}_{c_2 (f-1)})$$

$$+ \sum_{(c_1,c_2)\in C\times C:\, p^{adj}_{c_1 c_2} < t_{TCH}} \sum_{f\in F(c_1):\, f+1\in F(c_2)} p^{adj}_{c_1 c_2} \cdot (x^{TCH}_{c_1 f} \cdot x^{TCH}_{c_2 (f+1)} + x^{TCH}_{c_1 f} \cdot x^{BCCH}_{c_2 (f+1)}) \;\Big] adj$$

Fig. 10

$$A \cdot H_{interference} + B \cdot \left(H_{demand} + H_{combiner} + H_{neighbor} + H_{sector} + H_{threshold}\right)$$

Fig. 11

EP 4 262 305 B1

Fig. 12

**EP 4 262 305 B1**

**Patent documents cited in the description**

- EP 3735078 A1